# EUROPÄISCHE PATENTSCHRIFT

(11) **EP 3 194 696 B1**
(45) Veröffentlichungstag und Bekanntmachung des Hinweises auf die Patenterteilung: **15.06.2022**
(21) Anmeldenummer: 15771049.2
(22) Anmeldetag: 15.09.2015
(51) Int. Cl.: E05B 85/10

(54) **FLÄCHENBÜNDIGER KOMFORTGRIFF**
FLUSH COMFORT HANDLE
POIGNÉE CONFORTABLE À FLEUR DE LA SURFACE

(30) Priorität: 18.09.2014 DE 202014010524 U; 25.03.2015 DE 102015104545
(43) Veröffentlichungstag der Anmeldung: 26.07.2017
(73) Patentinhaber: Huf Hülsbeck & Fürst GmbH & Co. KG, 42551 Velbert (DE)
(72) Erfinder: BARTELS, Markus, 45472 Mülheim (DE); PORADA, Martin, 42109 Wuppertal (DE); RHEIN, Michael, 41199 Mönchengladbach (DE); CHRISTENSEN, Mario, 45470 Mülheim (DE)
(74) Vertreter: Bals, Rüdiger
(86) Internationale Anmeldenummer: PCT/EP2015/071142
(87) Internationale Veröffentlichungsnummer: WO 2016/041996

(56) Entgegenhaltungen:
- WO-A2-2008/129003
- DE-A1-102010 016 869
- DE-C1- 4 002 963
- GB-A- 2 477 085
- US-A1- 2013 076 048

## Beschreibung

Die vorliegende Erfindung ist auf eine Griffvorrichtung für eine Schließvorrichtung für ein bewegliches Teil, wie z. B. eine Tür, Klappe oder dergleichen, eines Kraftfahrzeuges gemäß dem Oberbegriff von Anspruch 1 gerichtet. Hierbei kommt ein Griffteil zum Einsatz, das zum beweglichen Teil beweglich lagerbar ist, wobei die Schließvorrichtung über ein Verbindungselement mit dem Griffteil verbindbar ist und das Griffteil zur Betätigung der Schließvorrichtung dient. Das Griffteil kann dabei selbst zwischen einer Ruhestellung und einer Betriebsstellung hin und her bewegbar sein. In der Ruhestellung des Griffteils ist das Griffteil insbesondere strakbündig mit dem beweglichen Teil ausbildbar, worunter zu verstehen ist, dass sich das Griffteil mehr oder weniger flächenbündig mit der Außenseite des beweglichen Teils verbündet. In der Betriebsstellung des Griffteils ist dieses abstehbar aus dem beweglichen Teil, damit es von einem Bediener greifbar ist. Ferner ist die vorliegende Erfindung auch auf ein Verfahren zum Betätigen einer Griffvorrichtung für eine Schließvorrichtung für ein bewegliches Teil gemäß dem Oberbegriff von Anspruch 14 gerichtet.

Aus dem Stand der Technik sind bereits flächenbündige Türaußengriffvorrichtungen bei Fahrzeugen bekannt. Hierbei kommen insbesondere Türgriffvorrichtungen zum Einsatz, die mit einer elektromechanischen Schließvorrichtung zusammenwirken. In diesem Fall braucht die Griffvorrichtung nur aus ihrer Ruhestellung in die Betriebsstellung fahren, in der der Bediener dann durch einfache Berührung oder durch Drücken eines Knopfes ein Öffnungssignal bzw. Auslösesignal für die elektromechanische Schließvorrichtung auslöst, die daraufhin das bewegliche Teil freigibt, wodurch es durch den Bediener zu öffnen ist. Dabei kann der Bediener an dem ausgefahrenen Griffteil in der Betriebsstellung eingreifen, um das bewegliche Teil aufzuschwenken.

Derartige Türgriffvorrichtungen weisen jedoch den Nachteil auf, dass bei einem Stromausfall das Fahrzeug die elektromechanische Schließvorrichtung nicht ohne Weiteres zu betätigen ist. Häufig benötigen derartige Griffvorrichtungen auch einen großen Bauraum, der gerade bei Kraftfahrzeugtüren als bewegliches Teil nur knapp bemessen ist. Häufig können derartige Türgriffvorrichtungen nicht überall an einer Kraftfahrzeugtür angeordnet werden, da der Platzbedarf häufig nicht ausreichend ist.

Aus der GB 2 477 085 A ist eine gattungsgemäße Griffvorrichtung gemäß dem Oberbegriff des Anspruchs 1 bekannt. Weiterhin sind Türgriffe aus der WO 2008/129003 A2, der DE 10 2010 016 869 A1, der DE 40 02 963 C1, der GB 2 477 085 A sowie der US 2013/076048 A1 bekannt.

Aufgabe der vorliegenden Erfindung ist es somit eine Griffvorrichtung sowie ein Verfahren zur Betätigung einer derartigen Griffvorrichtung bereitzustellen, welches zumindest teilweise die Nachteile aus dem Stand der Technik behebt. Insbesondere ist es eine Aufgabe der vorliegenden Erfindung, eine rein mechanische Griffvorrichtung zu schaffen, die einen hohen Betätigungskomfort für einen Bediener ermöglicht. Des Weiteren ist es insbesondere eine Aufgabe der vorliegenden Erfindung, dass die erfindungsgemäße Griffvorrichtung möglichst an jeder Stelle am beweglichen Teil, insbesondere einer Kraftfahrzeugtür, Klappe oder dergleichen, anordbar ist. Zusätzlich ist es eine Aufgabe der vorliegenden Erfindung, bei einer derartigen Griffvorrichtung die Aerodynamik des Fahrzeugs zu verbessern und die Unfallgefahr, insbesondere für Fußgänger, zu reduzieren.

Die zuvor genannte Aufgabe wird durch eine Griffvorrichtung mit den Merkmalen aus dem unabhängigen Vorrichtungsanspruch, insbesondere mit den Merkmalen aus dem kennzeichnenden Teil, gelöst. Insbesondere wird zur Lösung der Aufgabe ein Verfahren zur Betätigung einer derartigen Griffvorrichtung mit den Merkmalen des Anspruchs 14, insbesondere aus dem kennzeichnenden Teil, vorgeschlagen. In den abhängigen Vorrichtungs- und Verfahrensansprüchen sind bevorzugte Weiterbildungen der Erfindung aufgeführt. Merkmale, die zu der erfindungsgemäßen Griffvorrichtung offenbart werden, gelten dabei auch für das erfindungsgemäße Betätigungsverfahren und umgekehrt. Außerdem kann das erfindungsgemäße Betätigungsverfahren der erfindungsgemäßen Griffvorrichtung realisiert werden.

Im nachfolgenden Text werden geometrische Angaben zur erfindungsgemäßen Griffvorrichtungen immer im zusammengebauten Zustand beschrieben. Außerdem beziehen sich derartige geometrische Angaben auf die Einbausituation der erfindungsgemäßen Griffvorrichtung am Fahrzeug, wie sie beispielhaft in den Figuren dargestellt sind.

Bei der erfindungsgemäßen Griffvorrichtung für eine Schließvorrichtung für ein bewegliches Teil, wie z. B. eine Tür, Klappe oder dergleichen, bei einem Fahrzeug, kommt ein Griffteil zum Einsatz, das zu dem beweglichen Teil beweglich lagerbar ist. Dieses Griffteil ist über ein Verbindungselement mit der Schließvorrichtung verbindbar und dient dazu die Schließvorrichtung zu betätigen, wenn ein Bediener das Griffteil bedient. Das Griffteil ist zumindest zwischen einer Ruhestellung und einer Betriebsstellung bewegbar, wobei in der Ruhestellung das Griffteil insbesondere strakbündig mit dem beweglichen Teil ausbildbar ist und wobei in der Betriebsstellung das Griffteil aus dem beweglichen Teil derart abstehbar ist, dass es von dem Bediener greifbar ist. Unter "strakbündig" wird dabei verstanden, dass das Griffteil mehr oder weniger flächenbündig in der Außenseite bzw. Oberfläche des beweglichen Teils integriert ist. Somit ragt das Griffteil nicht störend aus dem beweglichen Teil heraus, wenn es eben nicht benutzt wird und in seiner Ruhestellung verharrt. Somit wird die Aerodynamik des Fahrzeugs in diesem Bereich deutlich verbessert, wodurch auch keine störenden Windgeräusche entstehen können. Außerdem wird auch zuverlässig eine Verletzung von Fußgängern vermindert, da auch hier das Griffteil nicht störend aus dem beweglichen Teil herausragt. Ferner ist es bei der erfindungsgemäßen Griffvorrichtung vorgesehen, dass das Griffteil aus seiner Betriebsstellung in eine zusätzlich Auslösestellung bewegbar ist, in der eine mechanische Betätigung des Griffteils auf das Verbindungselement übertragbar ist, wodurch die Schließvorrichtung selber betätigbar ist. Durch die Überführung des Griffteils von der Betriebsstellung in die zusätzliche Auslösestellung wird eine Betätigungskraft über das Verbindungselement auf die Schließvorrichtung übertragen, wodurch diese sich öffnen lässt. Dabei gibt die Schließvorrichtung eine Drehfalle frei, wodurch ein Formschluss mit einem U-förmigen Bügel am Fahrzeug freigeben wird, so dass sich das bewegliche Teil nach der Öffnung der Schließvorrichtung selber öffnen lässt. Hierzu ist noch ein Zug des Bedieners an dem beweglichen Teil, über das Griffteil, erforderlich. Alleine zu diesem Zweck ist es notwendig, dass das Griffteil in seiner Betriebsstellung aus dem beweglichen Teil greifbar herausragt. Die rein mechanische Betätigung der Schließvorrichtung weist den Vorteil auf, dass sich das bewegliche Teil auch bei einem Stromausfall der Fahrzeugelektronik oder einer Elektronik für die Griffvorrichtung noch auf einfache Art und Weise sowie komfortabel öffnen lässt.

Damit das Griffteil überhaupt aus dem Griffträger ausfahren kann, ist ein Durchbruch im Griffträger vorgesehen, wobei erfindungsgemäß das Griffteil sowohl in der Betriebsstellung als auch in der Auslösestellung den Durchbruch verdeckt. Damit sind Manipulationen der erfindungsgemäßen Griffvorrichtung ausgeschlossen. Hierbei ist es insbesondere vorstellbarr, dass der Durchbruch einen Rand aufweist, der ins Innere vom Griffträger ragt, um somit einen verbesserten Schutz zu bewirken. Der Rand kann gleichzeitig als Verstärkung des Durchbruches dienen und kann auch Kippstabilität des Griffteils bei der Bewegung zum Griffträger verbessern.

Ferner kann bei der erfindungsgemäßen Griffvorrichtung vorgesehen sein, dass das Griffteil zwischen der Ruhestellung und der Betriebsstellung linear bewegbar ist. Damit vollzieht das Griffteil eine kürzest mögliche Bewegungsstrecke zwischen der Ruhestellung und der Betriebsstellung, wodurch der Aufbau der gesamten Griffvorrichtung möglichst kompakt und in seiner Bautiefe minimierbar ist. Ferner ist es denkbar, dass das Griffteil zwischen der Betriebsstellung und der Auslösestellung bogenförmig, insbesondere bogenförmig nach oben hin oder nach unten hin, bewegbar ist. Da in der Regel die Griffvorrichtung am Fahrzeug recht niedrig für eine erwachsene Person angeordnet ist, entspricht gerade eine nach oben hin bogenförmige Bewegung des Griffteils zwischen der Betriebsstellung und der Auslösestellung einer ergonomischen und leichten Bedienung durch den Bediener. Hierdurch wird der Betätigungskomfort der Griffvorrichtung deutlich verbessert. Außerdem lässt sich aufgrund der besonderen Kinematik innerhalb der Griffvorrichtung die Zugkraft am Griffteil zwischen der Betriebsstellung und der Außenstellung derart optimieren, dass eine maximale Zugkraft über das vorgesehene Verbindungselement auf rein mechanische Schließvorrichtung übertragbar ist. Damit reicht eine leichte Zugkraft an dem Griffteil aus, um die Schließvorrichtung rein mechanisch öffnen zu können.

Des Weiteren ist es bei der erfindungsgemäßen Griffvorrichtung vorgesehen, dass das Griffteil durch einen Griffträger am beweglichen Teil lagerbar ist. Somit wird das Griffteil nicht direkt zu dem beweglichen Teil, sondern vielmehr indirekt über den Griffträger an dem beweglichen Teil angeordnet bzw. damit verbunden. Dabei kann es ferner vorgesehen sein, dass das Griffteil über zwei Hebel am Griffträger bewegbar angeordnet ist. Diese beiden Hebel können nebeneinander angeordnet sein und umgreifen das Griffteil beidseitig, um eine besonders stabile Führung des Griffteils zum Griffträger zu bewirken. Damit wird auch ein Verkanten des Griffteils während seiner Verstellung zuverlässig vermieden. Darüber hinaus hätte z. B. eine Linearführung zwischen Griffträger und Griffteil den Nachteil, dass diese bei entsprechenden Witterungsverhältnissen schnell einfrieren kann. Somit ist es zweckmäßig, wenn das Griffteil ausschließlich über die beiden Hebel bewegbar am Griffträger gehalten ist. Hierbei ist es denkbar, dass zumindest einer der Hebel jeweils über eine durchgehende Achse beidseitig mit dem Griffträger bewegbar verbunden ist. Aufgrund der durchgehenden Achse ist eine einfache Montage und eine besonders zuverlässige Anordnung der beiden Hebel am Griffträger realisierbar. Außerdem können die Drehachsen auch der Aufnahme von Federelementen dienen, die nachfolgend noch näher beschrieben werden. Ferner dienen die entsprechenden Achsen auch zur Erhöhung der Stabilität der gesamten Griffvorrichtung.

Des Weiteren ist es im Rahmen der Erfindung denkbar, dass die beiden Hebel zur Führung des Griffteils unterschiedlich voneinander angeordnete Dreh-/Schwenkpunkte aufweisen. Unter den unterschiedlich voneinander angeordneten Dreh-/Schwenkpunkten wird dabei verstanden, dass somit die entsprechenden Punkte sich nicht auf einer gemeinsamen Drehachse befinden. Vielmehr wird aufgrund der besonderen Kinematik erreicht, dass über die beiden Hebel das Griffteil zunächst die Linearbewegung zwischen der Ruhestellung und der Betriebsstellung vollzieht, um dann zwischen der Betriebsstellung und der Auslösestellung eine bogenförmige Bewegung zu ermöglichen. Ferner ist es möglich, dass die beiden Hebel seitlich nebeneinander angeordnet sind und nicht direkt miteinander verbunden sind. Vielmehr erfolgt eine Verbindung der Hebel über die Anordnung am Griffteil bzw. am Griffträger, die jedoch in jedem Falle indirekt ist. Auch können die beiden Hebel das Griffteil jeweils beidseitig, insbesondere von außen, umfassen bzw. einfassen. Dabei sind die beiden Hebel im Wesentlichen H-förmig oder U-förmig ausgestaltet, wobei das Griffteil zwischen den parallelen Schenkeln der beiden Hebel angeordnet ist. Durch die konkret ausgestalteten Hebel wird bereits das erwähnte Problem des Verkantens des Griffes beim Ausfahren und bei der Betätigung zuverlässig vermieden.

Auch ist es bei der Erfindung denkbar, dass der erste Hebel als Antriebshebel ausgebildet ist, um das Griffteil zumindest zwischen der Ruhestellung und der Betriebsstellung zu bewegen. Dabei kann eine Antriebskraft auf den Antriebshebel bzw. den ersten Hebel dazu dienen, das Griffteil aus seiner Ruhestellung automatisch bzw. selbstständig in die Betriebsstellung zu überführen. Hierzu kann ein erstes Federelement derart am ersten Hebel angreifen, dass das Griffteil von der Ruhestellung in die Betriebsstellung selbstständig überführbar ist. Somit dient das Federelement zur Erzeugung der bereits erwähnten Antriebskraft. Diese Ausgestaltung weist den Vorteil auf, dass keine motorische Kraft notwendig ist, für die ggf. auch elektrische Energie bereitgestellt werden muss, um das Griffteil aus der Ruhestellung in die Betriebsstellung zu überführen.

Des Weiteren ist es erfindungsgemäß denkbar, dass am ersten Hebel ein Antrieb, insbesondere ein elektromechanischer Antrieb in Form eines Elektromotors, angreift, wodurch das Griffteil zumindest zwischen der Ruhestellung und der Betriebsstellung bewegbar ist. Hierbei ist es von Vorteil, wenn der Antrieb den ersten Hebel von der Betriebsstellung in die Ruhestellung, überführt, womit gemeint ist, dass quasi der Antrieb das Griffteil einzieht und nicht ausfährt. Insbesondere ist es denkbar, dass der Antrieb eine Antriebskraft erzeugt, die entgegengesetzt einer Federkraft vom ersten Federelement gerichtet ist. Somit dient die Feder zum automatischen Ausfahren des Griffteils von der Ruhestellung in die Betriebsstellung und die Antriebskraft vom Antrieb zieht das Griffteil von der Betriebsstellung gegen die Federkraft des ersten Federelements zurück in die Ruhestellung. Idealerweise ist der Antrieb selbsthemmend aufgebaut, so dass er nachdem das Griffteil seine Ruhestellung erreicht hat, stromlos geschaltet werden kann und trotzdem in dieser Ruhestellung verharrt. Auch ist es denkbar, dass eine Verriegelung des Griffteils in der Ruhestellung erfolgt, so dass nur die Verriegelung überwunden werden muss, damit das erste Federelement das Griffteil automatisch von der Ruhestellung in die Betriebsstellung überführt.

Auch ist es im Rahmen der Erfindung vorstellbar, dass der zweite Hebel als Betätigungshebel ausgebildet ist, um die mechanische Bewegung des Griffteils von der Betriebsstellung zur Auslösestellung auf das Verbindungselement zu übertragen. Somit dient der zweite Hebel nicht nur zur Führung des Griffteils, sondern dient gleichzeitig dazu, auch gerade die insbesondere bogenförmige Bewegung des Griffteils auf das Verbindungselement zu übertragen. Auch ist es denkbar, dass eine Betätigung des Verbindungselements erst nach Erreichen der Betriebsstellung vom Griffteil möglich ist. Somit verursacht die zunächst erfolgte Bewegung des zweiten Hebels zwischen der Ruhestellung und der Betriebsstellung des Griffteils keine mechanische Übertragung auf das Verbindungselement. Damit ist sichergestellt, dass in jedem Fall das bewegliche Teil durch die Schließvorrichtung verschlossen bleibt, auch wenn das Griffteil zunächst aus seiner Ruhestellung in die Betriebsstellung überführt wird. Ferner ist es denkbar, dass insbesondere der zweite Hebel von der Betriebsstellung zur Auslösestellung eine Höhenbewegung zum Griffträger erfährt. Mit anderen Worten: der Hebel wird im Verhältnis zum Griffträger durch den Wechsel zur Betriebsstellung zur Auslösestellung angehoben. Gerade diese Hebelbewegung kann idealerweise auf das Verbindungselement zur Betätigung der Schließvorrichtung übertragen werden.

Ferner ist es im Rahmen der Erfindung vorstellbar, dass der zweite Hebel winkelförmig, insbesondere rechteckwinkelförmig ausgestaltet ist. Durch diese winkelförmige Anordnung des zweiten Hebels kann das bewegbare Griffteil auf besonders einfache Art und Weise am Griffträger beweglich angeordnet werden. Dabei können beim zweiten Hebel die Dreh- und Schwenkpunkte zum Griffträger jeweils im distalen Abstand zum Winkel bzw. am Ende des Winkels vorgesehen sein. Hierdurch wird die Wirkung des zweiten Hebels besonders effektiv ausgenutzt. Idealerweise kann zumindest ein Dreh-Schwenkpunkt des zweiten Hebels zum Griffträger als Dreh-Schwenklager zum Griffträger ausgestaltet sein, um auch die bereits beschriebene Höhenbewegung des zweiten Hebels zum Griffträger zu ermöglichen. Zweckmäßigerweise ist der untere Dreh-Schwenkpunkt als Langlochlager am zweiten Hebel ausgestaltet, der mit einem festen Drehpunkt zum Griffträger formschlüssig zusammenwirkt. Ein oberer Drehpunkt am zweiten Hebel kann als fester Drehpunkt zum Griffträger als Drehlager ausgestaltet sein. Durch das Zusammenspiel der beiden ersten und zweiten Hebel wird eine besonders elegante Kinematik zur Führung und Lagerung des Griffteils im Verhältnis zum Griffträger erzeugt. Insbesondere wird somit der Bauraum der erfindungsgemäßen Griffvorrichtung minimal ausgestaltet, wodurch die gesamte Griffvorrichtung örtlich beliebig am beweglichen Teil platzierbar ist.

Ferner ist es erfindungsgemäß vorstellbar, dass der zweite Hebel indirekt über einen Übertragungshebel mit dem Verbindungselement mechanisch zusammenwirkt, um insbesondere den Hebel zumindest teilweise vom Verbindungselement zu entkoppeln. Gerade durch den Einsatz des Übertragungshebels kann die Zugkraft, die ein Bediener auf das Griffteil ausübt, über den zweiten Hebel auf den Übertragungshebel erhöht werden, wodurch sich der Bedienkomfort der gesamten Griffvorrichtung erhöhen lässt. Ferner kann ein zweites Federelement mit dem Übertragungshebel zusammenwirken, um den Übertragungshebel in seine Ruheposition zu bewegen. Durch das zweite Federelement soll verhindert werden, dass kleine Erschütterungen am Griffteil, die insbesondere in der Auslösestellung wirken können, zu einem ungewollten Auslösen der Schließvorrichtung führen können. Auch kann eine bogenförmige Führung zwischen dem zweiten Hebel und dem Übertragungshebel vorhanden sein, um einen Freilauf zwischen dem zweiten Hebel und dem Übertragungshebel zu bilden. Dieser Freilauf ermöglicht, dass der zweite Hebel bei einer Bewegung des Griffteils von der Ruhestellung in die Betriebsstellung keine mechanische Übertragung auf den Übertragungshebel erzeugt. Ansonsten könnte es zu einer Fehlauslösung kommen, die in diesem Fall zu vermeiden ist. Zweckmäßigerweise kann der Übertragungshebel einen festen Drehpunkt zum Griffträger aufweisen. Des Weiteren ist es zweckmäßig, wenn der Übertragungshebel zumindest in seiner Ruheposition an einem Anschlag am Griffträger anliegt. Auch kann ein zweiter Anschlag zwischen Griffträger und Übertragungshebel vorgesehen sein, damit der Übertragungshebel nicht zu weit um den vorhandenen Drehpunkt mit dem Griffträger gedreht wird, wodurch bspw. eine Überbelastung beim Verbindungselement entstehen kann.

Zweckmäßigerweise kann es vorgesehen sein, dass ein Rand vom Durchbruch im Griffträger für das Griffteil kanalartig, insbesondere vollumfänglich ins Innere ausgestaltet ist, um mit den zuvor beschriebenen Bruchschutz der erfindungsgemäßen Griffvorrichtung sowie im beweglichen Teil vorgesehenen Schließvorrichtung zu verbessern. Auch kann der Rand ein Führungsmittel aufweisen, um das Griffteil zu führen. Dieses Führungsmittel kann optional zu den beiden Hebeln vorgesehen sein und entweder links- und/oder rechtsseitig bzw. oben und/oder unten zwischen dem Rand und dem Griffteil angeordnet werden. Dabei kann eine Nut als Führungsmittel mit einem Führungszapfen als Gegenführungsmittel zwischen Griffteil und Rand vorhanden sein. Auch ist es denkbar, dass im Rand vom Durchbruch eine Dichtung im Griffteil, zumindest in der Ruhestellung, abdichtend zusammenwirkt. Idealerweise ist die Dichtung so zwischen Rand und Griffteil vorgesehen, dass auch eine Abdichtung des Griffteils in der Betriebsstellung vorhanden ist. Dabei ist es auch denkbar, dass die Dichtung außenseitig am Griffteil angeordnet ist und mit dem Rand vom Durchbruch zusammenwirkt. Durch die Dichtung soll verhindert werden, dass Feuchtigkeit, Schmutz und Dreck sowie weitere störende Stoffe in das Innere der erfindungsgemäßen Griffvorrichtung eindringen können. Außerdem können durch die Griffvorrichtung auch weiterhin Windgeräusche zuverlässig vermieden werden. Selbstverständlich können auch zwei Dichtungen vorgesehen sein.

Um die Sicherheit der erfindungsgemäßen Griffvorrichtung zu erhöhen, kann zumindest eine Crashsperre und/oder ein Massenausgleichsgewicht vorhanden sein. Dabei soll die Crashsperre und/oder das Massenausgleichsgewicht dazu dienen, das Griffteil bei einem Crash möglichst in der Ruhestellung zu fixieren. Die Crashsperre kann dabei insbesondere formschlüssig das Griffteil zum Griffträger mechanisch blockieren, wobei der konkrete Formschluss zwischen Crashsperre und Griffteil auch an einem der beiden Hebel erfolgen kann. Die Crashsperre kann aber auch direkt mit dem Griffteil in der Ruhestellung formschlüssig zusammenwirken. Das bereits erwähnte Massenausgleichsgewicht kann ebenfalls zumindest an einem der beiden Hebel vorgesehen sein, um seine gewünschte Wirkung zu entfalten. Dabei ist es denkbar, dass das Massenausgleichsgewicht zumindest in einem der beiden Hebel integriert ist.

Um den Komfort der erfindungsgemäßen Griffvorrichtung weiterhin zu verbessern, kann es vorgesehen sein, dass wenigstens ein erstes Sensorelement vorhanden ist, um die Vorrichtung, ein Sicherheitssystem und/oder die Fahrzeugelektronik anzusteuern. So ist es bspw. denkbar, dass durch das Sensorelement eine Annäherung eines Bedieners erfassbar ist, wodurch das Griffteil der Griffvorrichtung selbstständig von der Ruhestellung in die Betriebsstellung überführbar ist. Auch kann durch diese Annäherung bspw. eine Kommunikation zwischen einem fahrzeugseitigem Sicherheitssystem und einem mobilen ID-Geber, den ein Bediener mit sich trägt, ausgelöst werden, um die Griffvorrichtung bspw. zu entriegeln. Hierbei kann das Sensorelement zumindest als Näherungssensor, Eingriffssensor, Antenne, Signalgeber, Lichtsensor oder Temperatursensor ausgestaltet sein. Durch die unterschiedlichen Sensorelemente können verschiedene Komfortwünsche bei der erfindungsgemäßen Griffvorrichtung realisiert werden. So kann bspw. der Temperatursensor dazu dienen, dass die Griffvorrichtung bei Temperaturen um den Gefrierpunkt aufgeheizt oder zumindest in Vibration versetzt wird. Der Lichtsensor kann dazu dienen, eine Leuchteinheit anzuschalten, wenn die Lichtverhältnisse es erforderlich machen. Die Antenne kann die Kommunikation mit dem mobilen ID-Geber oder weiteren Informationsgebern dienen. Zweckmäßigerweise ist zumindest auch eine Steuereinheit innerhalb der Griffvorrichtung vorgesehen, die mit dem Sensorelement datentechnisch verbunden ist. Durch diese Steuereinheit können die Daten des Sensorelements empfangen und ausgewertet werden, um die entsprechend gewünschten Funktionen bei der erfindungsgemäßen Griffvorrichtung oder der Fahrzeugelektronik oder des Sicherheitssystems auszulösen.

Um den Komfort der Griffvorrichtung weiter zu verbessern, können wenigstens zwei Sensorelemente vorhanden sein, wobei zumindest ein Sensorelement als kapazitiver Sensor ausgestaltet ist, um bspw. eine Annäherung eines Bedieners an die Griffvorrichtung messtechnisch zu erfassen. Auch ist es denkbar, dass zumindest beide Sensorelemente als kapazitive Sensoren ausgestaltet sind, wobei das erste Sensorelement eine Annäherung eines Bedieners an das Fahrzeug erfasst und das zweite Sensorelement ein Eingreifen eines Bedieners in eine Griffmulde des Griffteils. Zusätzlich kann auch ein weiteres Sensorelement vorgesehen sein, wie z. B. ein Hallsensor, der z. B. die Stellung des Griffteils überwacht oder eine Antenne, die mit einem externen ID-Geber einen Datenaustausch ermöglicht. Anhand dieser Informationen lassen sich gezielte Funktionen bei der erfindungsgemäßen Griffvorrichtung bzw. beim Fahrzeug realisieren.

Auch ist es denkbar, dass die erfindungsgemäße Griffvorrichtung zumindest eine Lichteinheit aufweisen kann, die wenigstens im Griffteil oder im Griffträger integriert ist, um eine Vorfeldbeleuchtung vor dem beweglichen Teil zu realisieren. Dabei kann die Lichteinheit auch von der bereits erwähnten Steuereinheit bspw. über ein Sensorelement, bspw. als Dämmerungssensor, angesteuert werden. Die Lichteinheit selber kann einen Lichtkegel aussenden, wobei eine Lichtquelle zur Lichterzeugung dient. Die Lichtquelle kann als LED, OLED, insbesondere in weißer Farbe ausgestaltet sein.

Um gerade bei einem Stromausfall in einem Fahrzeug den Betrieb der erfindungsgemäßen Griffvorrichtung weiterhin zu gewährleisten, kann ein mechanischer Schließzylinder bei der Griffvorrichtung vorgesehen sein, der von außen hinter dem Griffteil oder hinter einer Klappe oder einer Kappe anordbar ist. Durch diesen mechanischen Schließzylinder kann eine rein mechanische Entriegelung der Griffvorrichtung realisiert werden, um somit auch bei einem Stromausfall die rein mechanische Schließvorrichtung betätigen zu können. Ferner kann ein Taster, eine Klappe, oder eine Kappe zur Notausfahrung des Griffteils in seine Betriebsstellung dienen. Dieser Taster, Klappe oder Kappe, ist idealerweise in direkter Nachbarschaft zum ausfahrbaren Griffteil angeordnet, wobei eine Betätigung des Tasters, der Klappe oder der Kappe dazu dient, das Griffteil aus der Ruhestellung in die Betriebsstellung zu überführen. Gerade das ebenfalls erwähnte Federelement unterstützt hierbei die gewünschte Notbetätigung des Griffteils. So ist es z. B. vorstellbar, dass durch das Eindrücken des Tasters, der Kappe oder der Klappe der Schließzylinder zum Einsatz mit einem Schlüssel freigegeben wird und gleichzeitig eine Bewegung des Griffteils von seiner Ruhestellung in die Betriebsstellung erfolgt. Selbstverständlich können die erwähnte Klappe oder Kappe auch gedreht, geschwenkt oder gezogen werden, um die gewünschte Notausfahrung des Griffteils zu erwirken.

Um das Handling der Griffvorrichtung weiter zu verbessern, kann es vorgesehen sein, dass das Griffteil zumindest eine einseitige Griffmulde aufweist. Diese Griffmulde dient dazu, dass ein Bediener mit seiner Hand in das Griffteil eingreifen kann. Zweckmäßigerweise kann die Eingriffsmulde auch beidseitig offen ausgestaltbar sein. Hierdurch kann ein Bediener von oben oder von unten das Griffteil erfassen. Auch ist es denkbar, dass die Eingriffsmulde durchgehend ausgestaltet ist, so dass der Bediener durch das Griffteil durchgreifen kann.

Um den Bauraum der erfindungsgemäßen Griffvorrichtung möglichst gering zu halten, kann es vorgesehen sein, dass das Griffteil eine maximale Grifftiefe von 45 mm, bevorzugt 40 mm aufweist. Bei dieser angegebenen Griffteiltiefe ist noch ein optimaler Komfort des Griffteils auch für Erwachsene mit großen Händen möglich und trotzdem lässt sich die Griffvorrichtung beliebig am beweglichen Teil platzieren. Des Weiteren ist es zweckmäßig, dass ein Bauraum der Griffvorrichtung eine maximale Bautiefe von 65 mm, bevorzugt 60 mm und besonders bevorzugt von 55 mm aufweist. Dabei gilt, umso geringer die maximale Bautiefe ist, umso besser und einfacher lässt sich die Griffvorrichtung aufgrund ihres vorhandenen Bauraums an dem beweglichen Teil platzieren. Unter der zuvor erwähnten Bautiefe kann der kürzeste Abstand von einer Vorderseite bis zu einer Rückseite der Griffvorrichtung verstanden werden. Wobei die Vorderseite und die Rückseite auch als fiktive Ebenen verstanden werden können, da die Griffvorrichtung nicht unbedingt ein Gehäuse mit klaren geometrischen Strukturen aufweisen muss. In den beigefügten Figuren ist ein Beispiel für die Bestimmung der Bautiefe im vorliegenden Fall eingezeichnet.

Des Weiteren ist es optional denkbar, dass zumindest ein Verbindungselement als flexibles Verbindungselement, insbesondere als Bowdenzug, Kette oder Seilzug, ausgestaltet ist. Durch den Einsatz des flexiblen Verbindungselements kann eine klare örtliche Trennung zwischen der erfindungsgemäßen Griffvorrichtung, dem optional vorgesehenen Antrieb und der Schließvorrichtung vorgenommen werden. Auch lässt sich somit die erfindungsgemäße Vorrichtung für verschiedene Einbausituationen und Fahrzeuge verwenden. Gerade der Einsatz eines Bowdenzugs als flexibles Verbindungselement ist besonders kostengünstig und technisch elegant, da der Bowdenzug aus einer Hülle mit einer geführten Seele besteht, so dass auch ein Verhaken des Verbindungselements im Inneren des beweglichen Teils zuverlässig verhindert wird.

Zweckmäßigerweise ist am Griffträger zumindest ein Haltemittel zur Aufnahme von zumindest einem Verbindungselement vorgesehen. Sofern die erfindungsgemäße Griffvorrichtung durch einen Antrieb betrieben wird, sind zweckmäßigerweise zwei Haltemittel für zumindest zwei Verbindungselemente im Griffträger vorzusehen. Durch die Anordnung der Haltemittel am Griffträger lässt sich eine autarke Konstruktion der Griffvorrichtung im Verhältnis zum beweglichen Teil erzielen.

Erfindungsgemäß kann es vorgesehen sein, dass der Griffträger sowie das Griffteil als Spritzgussteil, insbesondere Kunststoffspritzgussteil, ausgestaltet ist. Hierdurch ist eine kostengünstige Herstellung realisierbar, wobei insbesondere Kunststoffe i.d.R. für messtechnische Anwendungen neutral ausgestaltet sind. Gerade der Griffträger (aber auch das Griffteil) kann einen glasfaserverstärkten Kunststoff aufweisen, um eine erhöhte Stabilität zu erreichen. Des Weiteren kann auch der Griffträger als Leichtbauteil, insbesondere aus Leichtmetall ausgestaltet sein. Hierbei kommt z. B. als Legierung ZAMAC in Frage. Idealerweise weist das Griffteil einen Hohlraum auf, in dem u. a. die Sensorelemente, die Steuereinheit, die Lichteinheit und/oder dergleichen untergebracht werden können.

Die vorliegende Erfindung ist auch auf ein Fahrzeug mit zumindest einer erfindungsgemäßen Griffvorrichtung gerichtet.

Ferner ist die vorliegende Erfindung auch auf ein Verfahren zur Betätigung einer Griffvorrichtung gemäß des Anspruchs 14 gerichtet. Zweckmäßigerweise kommt dabei die erfindungsgemäße Griffvorrichtung zum Einsatz. Bei dem erfindungsgemäßen Verfahren sind die folgenden Schritte ausführbar:
a) Lineares Ausfahren des Griffteils von der Ruhestellung in die Betriebsstellung
b) Bogenförmiges Schwenken des Griffteils von der Betriebsstellung zur Auslösestellung
c) Lineares Einfahren des Griffteils von der Betriebsstellung in die Ruhestellung.

Die Verfahrensschritte a) bis c) ermöglichen ein besonderes komfortables Betreiben der erfindungsgemäßen Griffvorrichtung, welches auch unter ergonomischen Gesichtspunkten sehr vorteilhaft ist. Außerdem kann das beschriebene Verfahren auch durch die weiteren Schritte ergänzt oder vervollständigt werden:
d1) Sensierung einer Annäherung von einem Bediener durch ein Sensorelement
d2) Sensierung eines Eingriffsversuches von einem Bediener in das Griffteil durch ein Sensorelement
e) Ansteuerung zumindest des Sicherheitssystems oder der Fahrzeugelektronik, insbesondere nach einer Sensierung nach Schritt d1) oder d2)
f) Wecken eines mobilen ID-Gebers eines Sicherheitssystems
g) Vorfeldbeleuchtung durch eine Lichteinheit.

Bei dem erfindungsgemäßen Verfahren ist es zum Ausfahren des Griffteils vorgesehen, dass zunächst der Schritt a) erfolgt und dann ggf. Schritt b) oder falls keine Betätigung des Griffteils gewünscht ist, direkt der Schritt c). Sofern Schritt b) erfolgt, muss das Griffteil selbstverständlich auch von der Auslösestellung zunächst in die Betätigungsstellung überführt werden. Erst dann kann im Schritt c) ein lineares Einfahren des Griffteils von der Betriebsstellung in die Ruhestellung erfolgen. Um den Komfort des erfindungsgemäßen Verfahrens für einen Bediener zu verbessern, kann bspw. in den Schritten d1) und d2) eine Annäherung einem Bediener sensiert werden, genauso wie ein Eingriffsversuch, wodurch ggf. automatisch der Schritt a) eingeleitet oder ausgeführt werden kann. Gleichzeitig oder nacheinander kann auch Schritt e), f) und/oder g) durchgeführt werden, so dass ein Bediener nur sich der erfindungsgemäßen Griffvorrichtung zu nähern braucht, wobei das Griffteil gemäß Schritt a) in die Betriebsstellung ausgefahren wird und vom Bediener greifbar ist, um das Griffteil in die Auslösestellung zu überführen, wodurch rein mechanisch die Schließvorrichtung am beweglichen Teil betätigt wird. Gleichzeitig kann hierbei das Sicherheitssystem oder die Fahrzeugelektronik angesteuert werden, um bereits genannte oder zusätzliche Funktionen auszuführen. Bei diesen Funktionen kann es sich um das Wecken eines mobilen ID-Gebers eines Sicherheitssystems nach Schritt f) handeln oder eine Vorfeldbeleuchtung bei Dunkelheit durch die Lichteinheit gemäß Schritt g). Darüber hinaus sind auch selbstverständlich weitere Funktionen denkbar, wie z. B. das Entriegeln der erfindungsgemäßen Griffvorrichtung nach der erfolgreichen Authentifizierung eines mobilen ID-Gebers.

Weitere Maßnahmen und Vorteile der vorliegenden Erfindung ergeben sich aus den Ansprüchen, der nachfolgenden Beschreibung und den Zeichnungen. Ebenfalls gelten offenbarte Merkmale von der erfindungsgemäßen Vorrichtung auch für das erfindungsgemäße Verfahren und umgekehrt. In den Zeichnungen ist die Erfindung in unterschiedlichen Ausführungsbeispielen dargestellt.

Es zeigen:
- Figur 1a-f: ein erstes Ausführungsbeispiel der erfindungsgemäßen Griffvorrichtung in einer Schnittansicht im Bewegungsablauf von seiner Ruhestellung über seine Betriebsstellung in seiner Auslösestellung und wieder zurück,
- Figur 2a-f: ein vergleichbares Ausführungsbeispiel der erfindungsgemäßen Griffvorrichtung aus den Figuren 1 in einer geänderten Schnittansicht,
- Figur 3a-c: ein vergleichbares Ausführungsbeispiel aus den Figuren 1 und 2 in einer weiteren Schnittansicht,
- Figur 4: eine Rückansicht auf ein weiteres Ausführungsbeispiel der erfindungsgemäßen Vorrichtung,
- Figur 5: eine Rückansicht auf ein weiteres Ausführungsbeispiel der erfindungsgemäßen Griffvorrichtung,
- Figur 6: eine Vorderansicht auf eine erfindungsgemäße Griffvorrichtung im eingebauten Zustand und
- Figur 7: eine Ansicht eines Fahrzeugs, insbesondere Kraftfahrzeugs, mit zumindest einer eingebauten erfindungsgemäßen Griffvorrichtung.

In den nachfolgenden Figuren werden für die gleichen technischen Merkmale auch von unterschiedlichen Ausführungsbeispielen der Erfindung die identischen Bezugszeichen verwendet.

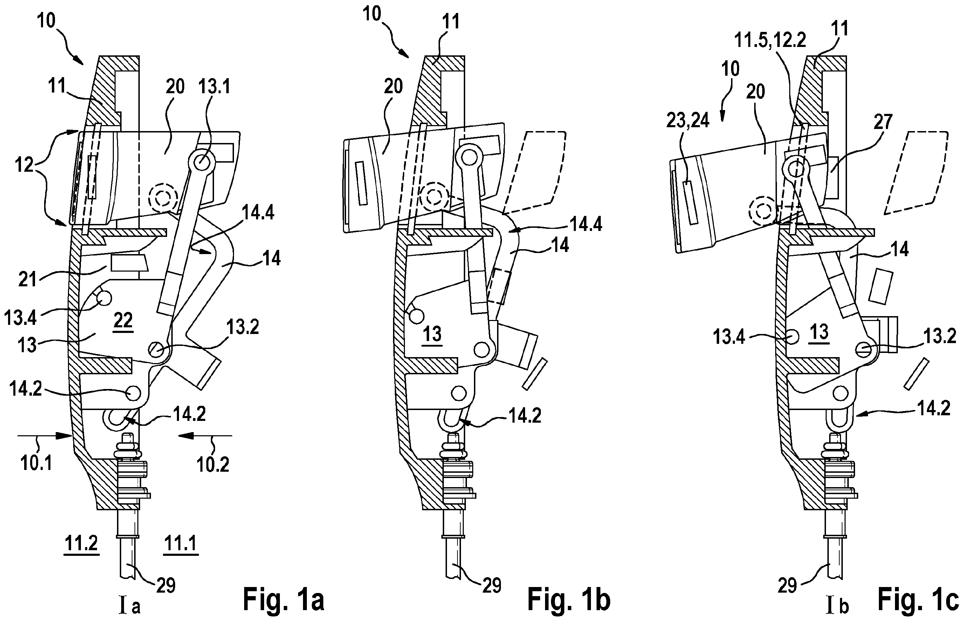

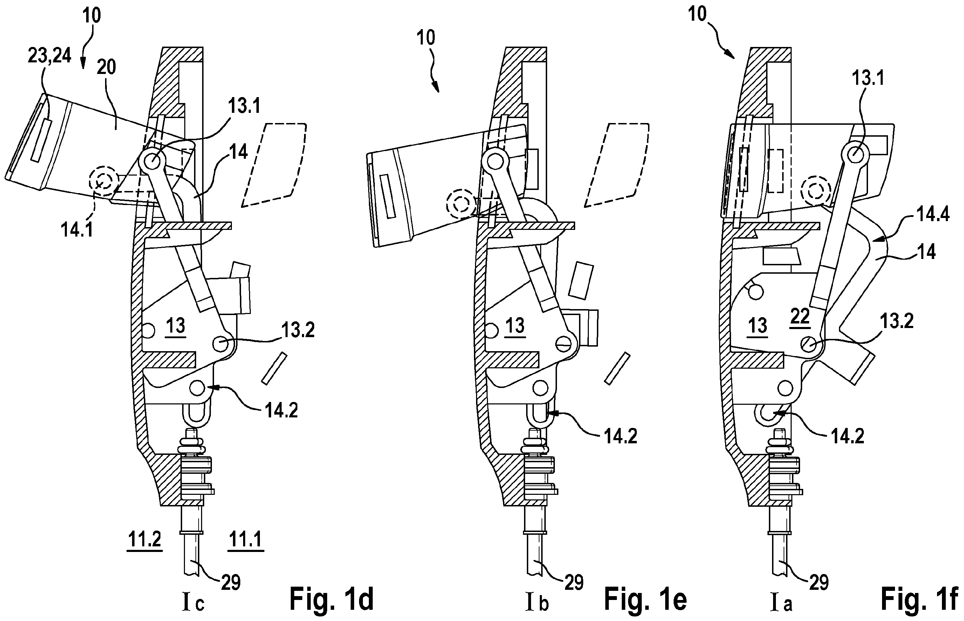

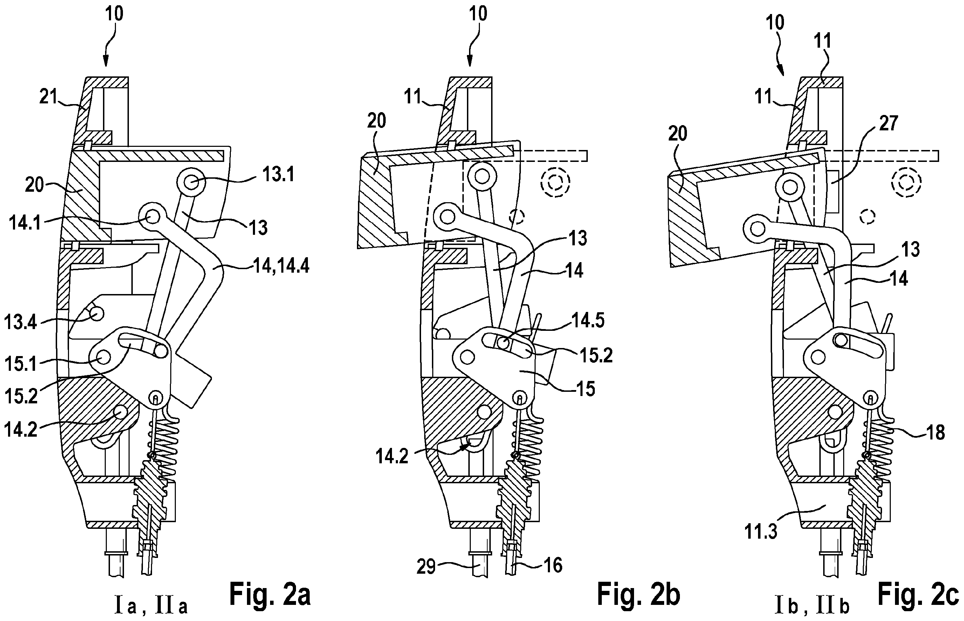

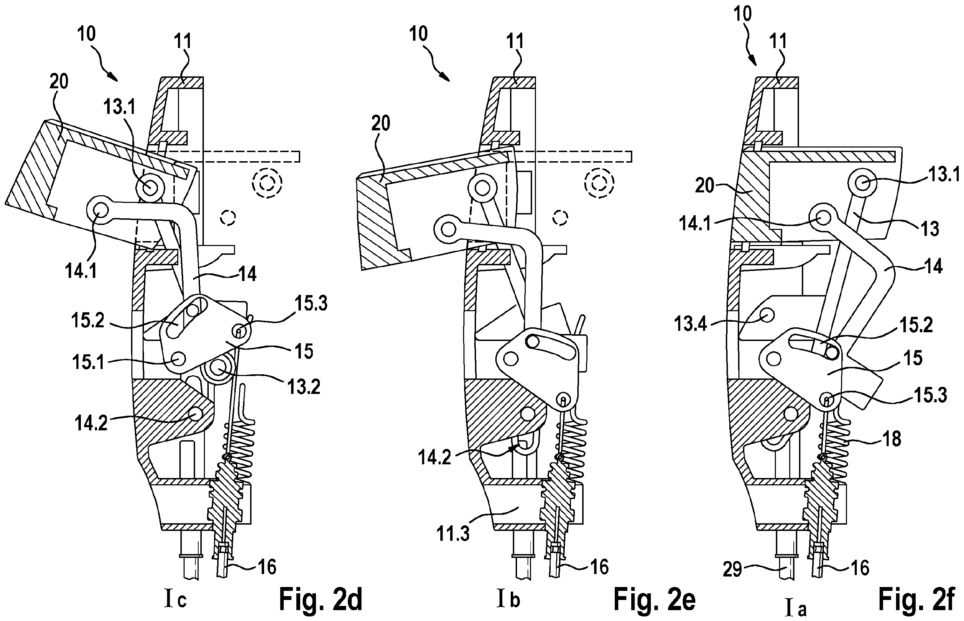

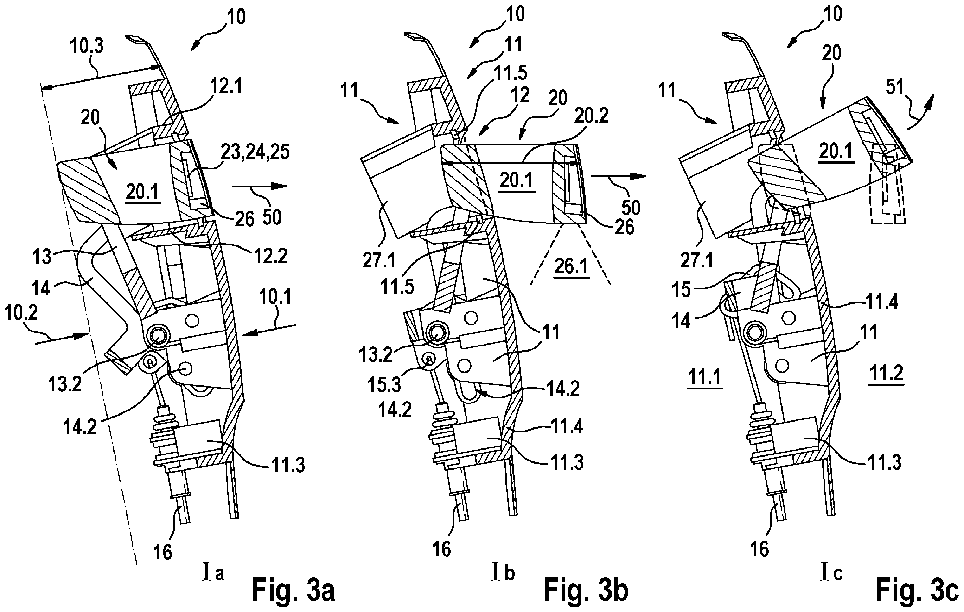

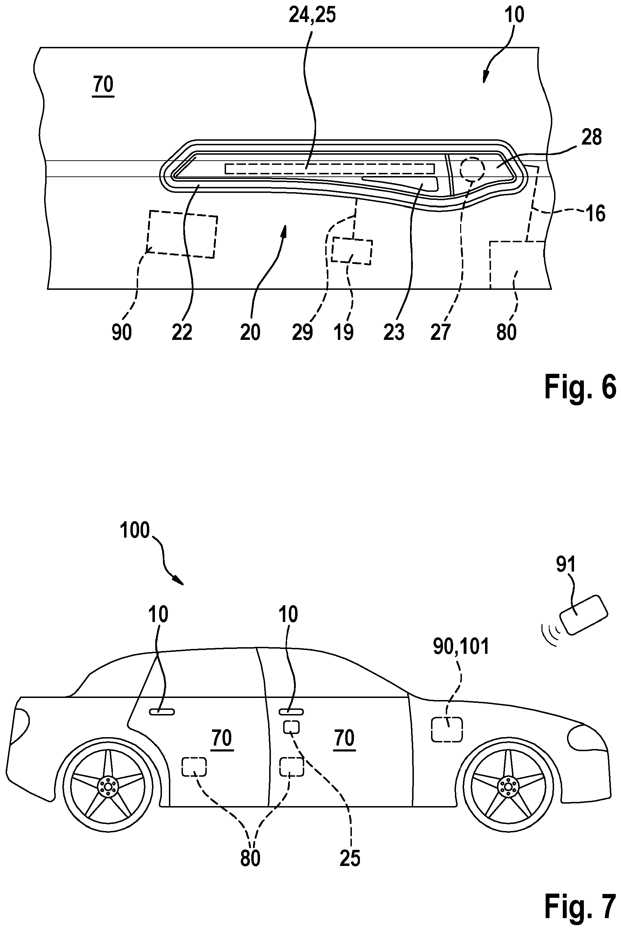

Die Figuren 1a bis 1f zeigen eine erfindungsgemäße Griffvorrichtung 10 in einem Längsschnitt während des Bewegungsablaufs eines Griffteils 20 von seiner Ruhestellung la über seine Betriebsstellung Ib in seine Auslösestellung Ic und wieder zurück. Folglich sind die Figuren 1a und 1f identisch, da sie jeweils das Griffteil 20 in der Ruhestellung la zeigen. Auch die Figuren 1 c und 1e sind im Wesentlichen identisch, da auch diese jeweils das Griffteil 20 in der Betriebsstellung Ib zeigen. Die erfindungsgemäße Griffvorrichtung 10 weist das ausfahrbare Griffteil 20 auf, welches beweglich gelagert in dem Griffträger 11 ist. Der Griffträger 11 dient dazu, die gesamte Griffvorrichtung 10 an einem beweglichen Teil 70, insbesondere einer Tür, einer Klappe oder dergleichen eines Kraftfahrzeugs 100 anzuordnen (s. z. B. Figur 6 und 7). Der Griffträger 11 weist selbst einen Durchbruch 12 auf, der im Wesentlichen in seinen Innenabmessungen komplementär zu den Außenabmessungen vom Griffteil 20 ausgestaltet ist. Der Durchbruch 12 selbst ist mit einem Rand 12.1 versehen, um einen Eingriff in die Griffvorrichtung 10, insbesondere ins Innere 11.1 von außen 11.2 für Unbefugte zu erschweren. Die Griffvorrichtung 10 weist selbst eine Vorderseite 10.1 und eine Rückseite 10.2 auf, wobei die fiktiven Ebenen der Vorderseite 10.11 und der Rückseite 10.2 einen minimalen Abstand aufweisen, der auch als Bautiefe 10.3 im Sinne der Erfindung bezeichnet werden soll. Die entsprechende Bautiefe 10.3 ist bspw. in der Figur 3a eingezeichnet. Wie weiter aus den Figuren 1a bis 1d hervorgeht, fährt das Griffteil 20 zunächst linear (s. Pfeil 50) aus dem Griffträger 11 durch den Durchbruch 12 heraus. Dabei wird das Griffteil 20 durch zumindest die beiden Hebel 13 und 14, die auch als erster Hebel 13 und als zweiter Hebel 14 bezeichnet werden, geführt. Dabei hat der erste Hebel 13 einen festen Drehpunkt 13.1 mit dem Griffteil 12. Auch der zweite Hebel 14 weist einen festen Drehpunkt 14.1 mit dem Griffteil 20 auf. Allerdings sind die beiden Drehpunkte 13.1 und 14.1 im Sinne der dargestellten Einbausituation aus den Figuren 1 höhen- und seitenversetzt zueinander angeordnet. Der Hebel 13 ist mit seinem vom Griffteil 20 abgewendeten Ende über einen weiteren festen (unteren) Drehpunkt 13.2 mit dem Griffträger 11 drehbar verbunden. Somit vollzieht der erste Hebel 13 ausschließlich eine Drehbewegung um den festen Drehpunkt 13.2 mit dem Griffträger 11. Der zweite Hebel 14 hingegen weist nur den oberen, festen Drehpunkt 14.1 mit dem Griffteil 20 auf und ist an seinem abgewandten Ende zum Griffteil 20 mit einem Langloch 14.2 ausgestattet, welches mit einem festen Drehpunkt 14.2 in Form eines Lagerzapfens am Griffträger 11 zusammenwirkt, um in diesem Bereich eine Drehschwenkbewegung auszuüben. Der zweite Hebel 14 weist einen Winkel 14.4 auf mit zwei Enden, an denen die beiden Dreh- /Schwenkpunkte distal zum Winkel 14.4 angeordnet sind. Bei der Bewegung des Griffteils 20 von der Ruhestellung la in seine Betriebsstellung Ib dreht sich zunächst der zweite Hebel 14 nur um den Drehpunkt 14.2 bzw. den Lagerzapfen 14.2. Erst nachdem das Griffteil 20 von seiner Betriebsstellung Ib in seine Auslösestellung Ic überführt wird, vollzieht der zweite Hebel 14 eine Höhenbewegung, die durch das Langloch 14.2, ermöglicht wird. Gerade die Bewegung des Griffteils 20 von der Betriebsstellung Ib in die Auslösestellung Ic sorgt für ein mechanisches Zusammenwirken zwischen dem zweiten Hebel 14 und einem weiteren Übertragungshebel 15, der in den Figuren 2 deutlich erkennbar ist.

Wie bereits erwähnt, vollzieht das Griffteil 20 zunächst eine lineare Bewegung 50 zwischen der Ruhestellung la und der Betriebsstellung Ib. Bei der weiteren Bewegung des Griffteils 20 von der Betriebsstellung Ib in die Auslösestellung Ic geht das Griffteil 20 von der linearen Bewegung 50 in eine bogenförmige (nach obenhin gerichtete) Bewegung 51 (s. Pfeil 51) über. Nachdem dann das Griffteil 20 in seine Auslösestellung Ic überführt worden ist, und eine mechanische Schließvorrichtung 80 durch ein Verbindungselement 16 betätigt worden ist, lässt sich das bewegliche Teil 70 öffnen. Um die Griffvorrichtung 10 im Inneren 11.1 möglichst gegen äußere Umwelteinflüsse zu schützen, ist im Durchbruch 12, insbesondere im Rand 12.1, eine Dichtung 11.5 umlaufend vorgesehen, die mit dem Griffteil 20 zusammenwirkt, um den Durchbruch 12 zu verschließen. Gleichzeitig kann die Dichtung 11.5 auch als Führungsmittel 12.2 für das Griffteil 20 dienen. Wie in der Figur 1c und 2c gut zu erkennen ist, ist neben dem Griffteil 20 ein mechanischer Schließzylinder 27 am Griffträger 11 angeordnet. Üblicherweise wird ein derartiger mechanischer Schließzylinder 27 über eine oder in einer Aufnahme 27.1 mit dem Griffträger 11 verbunden (s. zur Aufnahme des Schließzylinders 27.1, Figur 3 bis 5).

In den Figuren 1a, 1f sowie 2a und 2f ist das Griffteil 20 in der Ruhestellung la dargestellt. In der Figur 1b sowie 2b ist das Griffteil 20 in einer Zwischenstellung zwischen der Ruhestellung la und der Betriebsstellung Ib dargestellt. In den Figuren 1c, 1e sowie 2c und 2e befindet sich das Griffteil 20 jeweils in seiner Betriebsstellung Ib. In den Figuren 1d und 2d ist das Griffteil dann in seiner Auslösestellung 1c gezeigt, wobei das Griffteil 20 über das Verbindungselement 16, welches im vorliegenden Fall als Bowdenzug ausgestaltet ist, mit der (rein) mechanischen Schließvorrichtung 80 mechanisch zusammenwirkt. Die mechanische Schließvorrichtung 80 ist in den Figuren 6 und 7 angedeutet.

Wie weiter aus den Figuren 1 gut zu erkennen ist, kann der Hebel 13 mit einem Massenausgleichsgewicht 22 versehen sein, um die Unfallsicherheit der erfindungsgemäßen Türgriffvorrichtung 10 zu erhöhen. Gleichzeitig kann an dem Massenausgleichsgewicht 22 auch der Angriffspunkt 13.4 für ein zusätzliches oder weiteres Verbindungselement 29 vorgesehen sein, welches mit einem Antrieb 19 zusammenwirkt. Der Antrieb 19 kann als Elektromotor ausgestaltet sein und durch eine Steuereinheit 25 von der Griffvorrichtung 10 angesteuert werden.

In den Figuren 1 erzeugt der erwähnte Antrieb 19 über das weitere Verbindungselement 29, welches insbesondere als Bowdenzug ausgestaltet sein kann, eine Zugbewegung im Angriffspunkt 13.4 vom Hebel 13, wodurch sich dieser Hebel 13 im Gegenuhrzeigersinn um seinen Drehpunkt 13.2 dreht und das Griffteil 20 in seine Betriebsstellung Ib drückt. Will ein Bediener nun das bewegliche Teil 70 öffnen, so muss er an dem ausgefahrenen Griffteil 20 in der Betriebsstellung Ib eine bogenförmige Drehbewegung 51 des Griffteils 20 in die Auslösestellung Ic erzeugen, die dazu führt, dass der Hebel 14 eine Höhenbewegung erzeugt und den Übertragungshebel 15 aus einer Ruheposition IIa in seine Auslöseposition IIb um den festen Drehpunkt 15.1 dreht. In seiner Ruheposition IIa schlägt der Übertragungshebel 15 an einem Anschlag des Griffträgers 11 an.

Die Funktionsweise des Übertragungshebels 15 ist deutlicher aus den Figuren 2 zu erkennen. Wie anhand der Figuren 2a bis 2c gut zu erkennen ist, verursacht eine Bewegung des Griffteils 20 von seiner Ruhestellung la in seine Betriebsstellung Ib zunächst keine Bewegung des Übertragungshebels 15, da ein Mitnehmer 14.5 vom zweiten Hebel 14 in der bogenförmigen Langloch-Führung 15.2 vom Übertragungshebel einfach entlang gleitet und somit der bereits erwähnte Freilauf gebildet ist. Erst wenn der Mitnehmer 14.5 vom zweiten Hebel 14 am Ende der bogenförmigen Führung 15.2 des Übertragungshebels 15 in der Betriebsstellung Ib vom Griffteil 20 angelangt ist, kann durch eine weitere Bewegung des Griffteils 20 in Richtung seiner Auslösestellung Ic eine Bewegung vom Mitnehmer 14.5 auf den Übertragungshebel 15 erfolgen. Hierbei wird dann der Übertragungshebel 15 durch den Mitnehmer 14.5 vom zweiten Hebel 14 um seinen festen Drehpunkt 15.1 im Gegenuhrzeigersinn gemäß der Figuren 2 gedreht. Hierdurch wird der Angriffspunkt 15.3 für das Verbindungselement 16 nach oben gehoben, wodurch eine Zugkraft auf das Verbindungselement 16 ausgeübt wird. Zweckmäßigerweise ist der Übertragungshebel 15 durch ein zusätzliches Federelement federbelastet, wodurch der Übertragungshebel 15 grundsätzlich in seine Ruheposition IIa gezogen wird. Aus den Figuren 2d bis 2f geht deutlich das mechanische Zusammenwirken zwischen dem zweiten Hebel 14 und dem Übertragungshebel 15 hervor. Auch wird deutlich, dass sich der zweite Hebel 14 aufgrund seines Langlochs 14.2 zum Drehpunkt 14.2 bzw. Drehzapfen 14.2 anhebt.

In den Figuren 3a, 3b und 3c ist eine weitere Schnittansicht der erfindungsgemäßen Griffvorrichtung 10 dargestellt. Dabei wird der Bewegungsablauf des Griffteils 20 von der Ruhestellung la über seine Betriebsstellung Ib in seine Auslösestellung Ic gezeigt. Bei diesem Ausführungsbeispiel ist eine Lichteinheit 26 im Griffteil 20 angeordnet, die aber auch optional oder zusätzlich in dem Griffträger 11 anordbar ist. Wie anhand der Figur 3b und 3c zu erkennen ist, kann die Lichteinheit 26 einen Lichtkegel 26.1 aussenden, um eine Vorfeldbeleuchtung zu realisieren. Ebenfalls geht aus den Figuren 3a bis 3c noch einmal die Funktionsweise des Übertragungshebels 15 hervor, der über seinen Angriffspunkt 15.3 mit dem Verbindungselement 16 für die mechanische Schließvorrichtung 80 zusammenwirkt. Der Griffträger 11 kann zusätzlich mit einer Blende 11.4 versehen sein, um das bewegliche Teil 70 formschön im Bereich der Griffvorrichtung 10 abzudecken. Ferner ist am Griffträger 11 zumindest ein Haltemittel 11.3 für das Verbindungselement 16 oder 29 vorgesehen. In den Schnittdarstellungen der Figuren 3a bis 3c ist das entsprechende Haltemittel 11.3 zur Aufnahme des Verbindungselements 16 am Griffträger 11 gut erkennbar.

Ferner weist das Griffteil 20 einen nach außen hin gerichteten Hohlraum auf, in dem die diversen Sensorelemente 23, 24 etc. anordbar, insbesondere hinter einem Deckel oder Blende, sind. Auch die erwähnte Steuereinheit 25 kann in diesem Hohlraum untergebracht sein, wie in den Figuren 3 gezeigt.

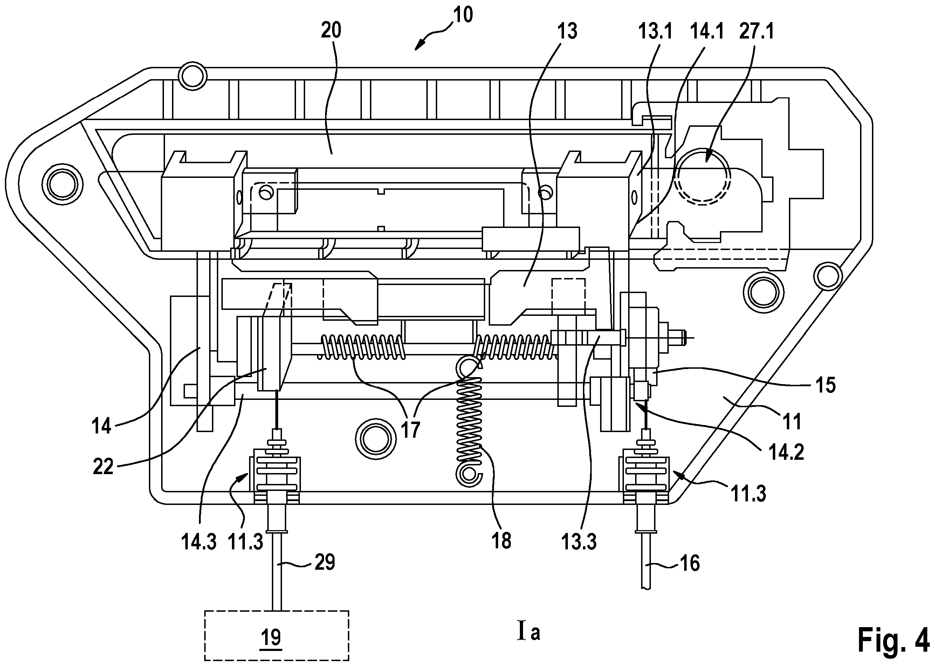

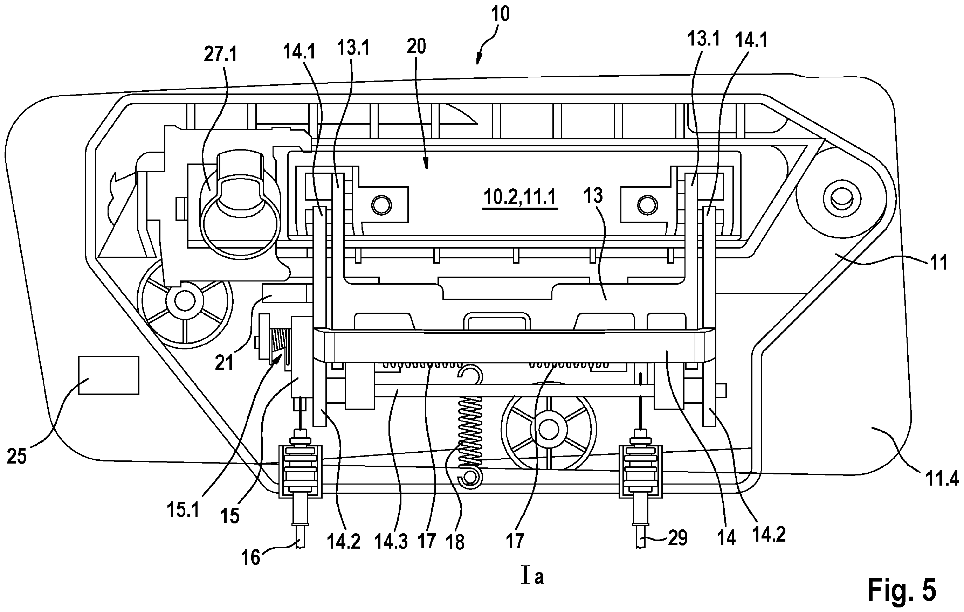

Aus der Rückansicht aus Figur 4 auf die Griffvorrichtung 10 ist ebenfalls gut erkennbar, dass der erste Hebel 13, sowie der zweite Hebel 14 U- bzw. H-förmig ausgestaltet ist. Mit den beiden parallelen Schenkeln der U-förmigen bzw. H-förmigen Hebel 13, 14 wird das Griffteil 20 beidseitig umfasst bzw. gehalten. Dabei sind gut die oberen Drehpunkte 13.1 vom ersten Hebel 13 und der Drehpunkt 14.1 vom zweiten Hebel 14.1 zu erkennen. Die unteren Drehpunkte der beiden Hebel 13 und 14 werden durch die Achsen 13.3 und 14.3 gebildet, die jeweils durchgehend ausgestaltet sind. Die Achse 13.3, die gleichzeitig als Drehpunkt 13.2 für den Hebel 13 dient, ist mit einem ersten Federelement 17 als Spiralfeder versehen, wodurch der erste Hebel 13 federbelastet ist, wodurch das Griffteil 20 von seiner Ruhestellung la automatisch durch das erste Federelement 17 in seine Betriebsstellung Ib gedrückt wird. Aus dieser Betriebsstellung Ib kann das Griffteil 20 durch das weitere erfindungsgemäße Griffvorrichtung 10 dargestellt. Hierbei kommt eine Blende 11.4 beim Griffträger 11 zum Einsatz, wobei der Griffträger 11 selbst Gitterstrukturen zur Verstärkung aufweist. Zusätzlich ist rein exemplarisch in der Figur 5 auch eine Crashsperre 21 eingezeichnet, die formschlüssig mit dem Bewegungsmechanismus vom Griffteil 20 zusammenwirken kann, um bei einem Unfall eine ungewollte Bewegung des Griffteils 20 zu verhindern.

In der Figur 6 ist eine Draufsicht von außen auf ein bewegliches Teil 70, in Form einer Kraftfahrzeugtür, dargestellt. Hierbei ist neben dem ausfahrbaren Griffteil 20 eine Taste 27, bzw. Klappe 27, bzw. Kappe 27, oberhalb eines gestrichelt dargestellten mechanischen Schließzylinders 27 angeordnet. Durch die Betätigung dieser Taste, Klappe oder Kappe 27 kann auch rein mechanisch das Griffteil 20 entriegelt werden und durch das erste Federelement 27 von der Ruhestellung la in die Betriebsstellung Ib überführt werden. Zusätzlich ist in der Figur 6 auch ein Sicherheitssystem 90, insbesondere in Form einer Zentralverriegelung, dargestellt. Dieses Sicherheitssystem 90 kann mit einem mobilen ID-Geber 91, der in der Figur 7 gezeigt ist, zusammenwirken, um eine elektronische Authentifizierung bzw. Entriegelung der Zentralverriegelung zu bewirken.

In der Figur 7 ist dann ein vollständiges Fahrzeug 100 mit zwei erfindungsgemäßen Griffvorrichtungen 10 an zwei beweglichen Teilen 70 gezeigt. Rein exemplarisch ist im Motorraum die Fahrzeugelektrik 101 bzw. das Sicherheitssystem 90 gestrichelt dargestellt. Die voranstehende Erläuterung der Ausführungsformen beschreibt die vorliegende Erfindung ausschließlich im Rahmen von Beispielen.

### Bezugszeichenliste

- 10: Griffvorrichtung
- 10.1: Vorderseite
- 10.2: Rückseite
- 10.3: Bautiefe
- 11: Griffträger
- 11.1: Innen
- 11.2: Außen
- 11.3: Haltemittel
- 11.4: Blende
- 11.5: Dichtung
- 12: Durchbruch
- 12.1: Rand von 12
- 12.2: Führungsmittel
- 13: Erster Hebel, insbesondere Antriebshebel
- 13.1: Drehpunkt
- 13.2: Drehpunkt
- 13.3: Achse
- 13.4: Angriffspunkt für 29
- 14: Zweiter Hebel, insbesondere Betätigungshebel
- 14.1: Drehpunkt
- 14.2: Drehpunkt / Langloch in 14
- 14.3: Achse
- 14.4: Winkel
- 14.5: Mitnehmer für 15
- 15: Übertragungshebel
- 15.1: Drehpunkt
- 15.2: Bogenförmige Führung / bogenförmiges Langloch
- 15.3: Angriffspunkt für 16
- 16: Verbindungselement
- 17: Erstes Federelement für 13
- 18: Zweites Federelement für 15
- 19: Antrieb für 10, insbesondere 20
- 20: Griffteil
- 20.1: Eingriffsmulde
- 20.2: Griffteiltiefe
- 21: Crashsperre
- 22: Massenausgleichsgewicht
- 23: Erstes Sensorelement
- 24: Zweites Sensorelement
- 25: Steuereinheit
- 26: Lichteinheit
- 26.1: Lichtkegel
- 27: mechanischer Schließzylinder
- 27.1: Aufnahme für 27 in 11
- 28: Klappe / Kappe / Taster
- 29: Weiteres Verbindungselement für 19

- 50: Pfeil - lineare Bewegung
- 51: Pfeil - bogenförmige Bewegung
- 52: Pfeil - Höhenbewegung von 14

- 70: bewegliches Teil, insbesondere Tür, Klappe oder dergleichen

- 80: Schließvorrichtung, insbesondere mechanisches Schloss

- 90: Sicherheitssystem, insbesondere Zentralverriegelung
- 91: mobiler ID-Geber

- 100: Fahrzeug, insbesondere KFZ
- 101: Fahrzeugelektronik

- Ia: Ruhestellung von 20
- Ib: Betriebsstellung von 20
- Ic: Auslösestellung von 20

- IIa: Ruheposition von 15
- IIb: Auslöseposition von 15

## Patentansprüche

1. Griffvorrichtung (10) für eine Schließvorrichtung (80) für ein bewegliches Teil (70), wie eine Tür, Klappe oder dergleichen, eines Fahrzeuges (100)
mit einem Griffteil (20), das zu dem beweglichen Teil (70) beweglich lagerbar ist, wobei die Schließvorrichtung (80) über ein Verbindungselement (16) mit dem Griffteil (20) verbindbar ist und das Griffteil (20) zur Betätigung der Schließvorrichtung (80) dient, wobei das Griffteil (20) zumindest zwischen einer Ruhestellung (la) und einer Betriebsstellung (Ib) bewegbar ist,
wobei in der Ruhestellung (la) das Griffteil (20) insbesondere strakbündig mit dem beweglichen Teil (70) ausbildbar ist, und
wobei in der Betriebsstellung (Ib) das Griffteil (20) aus dem beweglichen Teil (70) derart abstehbar ist, dass es von einem Bediener greifbar ist,
wobei das Griffteil (20) aus seiner Betriebsstellung (Ib) in eine zusätzliche Auslösestellung (Ic) bewegbar ist, in der eine mechanische Betätigung des Griffteils (20) auf das Verbindungselement (16) übertragbar ist, wodurch die Schließvorrichtung (80) betätigbar ist, **dadurch gekennzeichnet, dass** das Griffteil (20) durch einen Griffträger (11) am beweglichen Teil (70) lagerbar ist und wobei ein Durchbruch (12) im Griffträger (11) für das Griffteil (20) sowohl in der Betriebsstellung (Ib) als auch in der Auslösestellung (Ic) durch das ausgefahrene Griffteil (20) verdeckt ist.

2. Griffvorrichtung (10) nach Anspruch 1,
**dadurch gekennzeichnet,**
**dass** das Griffteil (20) zwischen der Ruhestellung (la) und der Betriebsstellung (Ib) linear (50) bewegbar ist, und/oder
**dass** das Griffteil (20) zwischen der Betriebsstellung (Ib) und der Auslösestellung (Ic) bogenförmig (51), insbesondere bogenförmig nach oben hin, bewegbar ist.

3. Griffvorrichtung (10) nach Anspruch 1 oder 2,
**dadurch gekennzeichnet,**
**dass** das Griffteil (20) über zwei Hebel (13, 14) am Griffträger (11) bewegbar angeordnet ist, und/oder
wobei zumindest einer der Hebel (13, 14) jeweils über eine durchgehende Achse (13.3, 14.3) beidseitig mit dem Griffträger (11) bewegbar verbunden ist.

4. Griffvorrichtung (10) nach einem der vorherigen Ansprüche,
**dadurch gekennzeichnet,**
**dass** die beiden Hebel (13, 14) zur Führung des Griffteils (20) unterschiedlich voneinander angeordnete Dreh-/Schwenkpunkte (13.1, 13.2, 14.1, 14.2) aufweisen, und/oder
wobei insbesondere die beiden Hebel (13, 14) seitlich nebeneinander angeordnet sind und nicht direkt miteinander verbunden sind, und/oder
wobei insbesondere die beiden Hebel (13, 14) das Griffteil (20) jeweils beidseitig, insbesondere von außen, umfassen.

5. Griffvorrichtung (10) nach einem der vorherigen Ansprüche,
**dadurch gekennzeichnet,**
**dass** der erste Hebel (13) als Antriebshebel ausgebildet ist, um das Griffteil (20) zumindest zwischen der Ruhestellung (la) und der Betriebsstellung (Ib) zu bewegen, wobei insbesondere ein erstes Federelement (17) derart am ersten Hebel (13) angreift, dass das Griffteil (20) von der Ruhestellung (la) in die Betriebsstellung (Ib) selbstständig überführbar ist und/oder
**dass** am ersten Hebel (13) ein Antrieb (19) angreift, wodurch das Griffteil (20) zumindest zwischen der Ruhestellung (la) und der Betriebsstellung (Ib) bewegbar ist,
wobei insbesondere der Antrieb (19) eine Antriebskraft erzeugt, die entgegengesetzt einer Federkraft vom ersten Federelement (17) gerichtet ist.

6. Griffvorrichtung (10) nach einem der vorherigen Ansprüche,
**dadurch gekennzeichnet,**
**dass** der zweite Hebel (14) als Betätigungshebel ausgebildet ist, um die mechanische Bewegung des Griffteils (20) von der Betriebsstellung (Ib) zur Auslösestellung (Ic) auf das Verbindungselement (16) zu übertragen, und/oder
wobei insbesondere eine Betätigung des Verbindungselements (16) erst nach Erreichen der Betriebsstellung (Ib) vom Griffteil (20) möglich ist, und/oder wobei insbesondere der zweite Hebel (14) von der Betriebsstellung (Ib) zur Auslösestellung (Ic) eine Höhenbewegung zum Griffträger (11) erfährt und/oder dass der zweite Hebel (14) winkelförmig (14.4), insbesondere rechteckwinkelförmig, ausgestaltet ist,
wobei insbesondere seine Dreh-/Schwenkpunkte (14.1, 14.2) zum Griffträger (11) jeweils im distalen Abstand zum Winkel (14.4) bzw. am Ende des Winkels (14.4) vorgesehen sind, und/oder
wobei zumindest ein Dreh-/Schwenkpunkt(14.1, 14.2) zum Griffträger (11) als Dreh- /Schwenklager zum Griffträger (11) ausgestaltet ist, um auch eine Höhenbewegung des zweiten Hebels (14) zum Griffträger (11) zu ermöglichen und/oder dass der zweite Hebel (14) indirekt über einen Übertragungshebel (15) mit dem Verbindungselement (16) mechanisch zusammenwirkt, um insbesondere den Hebel (15) zumindest teilweise vom Verbindungselement (16) zu entkoppeln, und/oder wobei insbesondere ein zweites Federelement (18) mit dem Übertragungshebel (15) zusammenwirkt, um den Übertragungshebel (15) in seine Ruheposition (IIa) zu bewegen, und/oder
wobei insbesondere eine bogenförmige Führung (15.2) zwischen dem zweiten Hebel (14) und dem Übertragungshebel (15) vorhanden ist, um einen Freilauf zwischen dem zweiten Hebel (14) und dem Übertragungshebel (15) zu bilden, und/oder wobei insbesondere der Übertragungshebel (15) einen Drehpunkt (15.1) zum Griffträger (11) aufweist.

7. Griffvorrichtung (10) nach einem der vorherigen Ansprüche,
**dadurch gekennzeichnet,**
**dass** der Durchbruch (12) einen Rand (12.1) aufweist, der ins Innere vom Griffträger (11) ragt, um diesen zu schützen und/oder
**dass** ein Rand (12.1) vom Durchbruch (12) im Griffträger (11) für das Griffteil (20) kanalartig, insbesondere vollumfänglich, ins Innere (11.1) ausgestaltet ist, und/oder wobei der Rand (12.1) ein Führungsmittel (12.2) aufweist, um das Griffteil (20) zu führen.

8. Griffvorrichtung (10) nach einem der vorherigen Ansprüche,
**dadurch gekennzeichnet,**
**dass** zumindest eine Crashsperre (21) und/oder ein Massenausgleichsgewicht (22) vorhanden ist, um das Griffteil (20) bei einem Crash in der Ruhestellung (la) zu fixieren, wobei insbesondere die Crashsperre (21) und/oder das Massenausgleichsgewicht (22) mit zumindest einem der beiden Hebel (13, 14) mechanisch zusammenwirkt.

9. Griffvorrichtung (10) nach einem der vorherigen Ansprüche,
**dadurch gekennzeichnet,**
**dass** wenigstens ein erstes Sensorelement (23, 24) vorhanden ist, um die Griffvorrichtung (10), ein Sicherheitssystem (90) und/oder die Fahrzeugelektronik (101) anzusteuern,
wobei das Sensorelement (23, 24) zumindest als Näherungssensor, Eingriffssensor, Antenne, Signalgeber oder Temperatursensor ausgestaltet ist und insbesondere mit einer Steuereinheit (25) innerhalb der Griffvorrichtung (10) verbunden ist und/oder dass wenigstens zwei Sensorelemente (23, 24) vorhanden sind, wobei zumindest ein Sensorelement (23, 24) als kapazitiver Sensor ausgestaltet ist, und/oder dass zumindest eine Lichteinheit (26) vorhanden ist, die wenigstens im Griffteil (20) oder im Griffträger (11) integriert ist, um eine Vorfeldbeleuchtung zu realisieren.

10. Griffvorrichtung (10) nach einem der vorherigen Ansprüche,
**dadurch gekennzeichnet,**
**dass** zumindest ein mechanischer Schließzylinder (27) insbesondere am Griffträger (11) vorgesehen ist, wodurch eine mechanische Entriegelung bzw. Verriegelung der Schließvorrichtung (80) erreichbar ist und/oder
**dass** der mechanische Schließzylinder (27) von außen hinter dem Griffteil (20) oder hinter einer Klappe (28) oder eine Kappe (28) angeordnet ist, und/oder dass ein Taster (28), eine Klappe (28) oder eine Kappe (28) zur Notausfahrung des Griffteils (20) in seine Betriebsstellung (Ib) dient.

11. Griffvorrichtung (10) nach einem der vorherigen Ansprüche,
**dadurch gekennzeichnet,**
**dass** das Griffteil (20) zumindest eine einseitige Eingriffsmulde (20.1) aufweist, wobei insbesondere die Eingriffsmulde (20.1) auch beidseitig offen vorsehbar ist, und/oder
wobei das Griffteil (20) eine maximale Griffteiltiefe (21.2) von 45 mm, bevorzugt 40 mm aufweist.

12. Griffvorrichtung (10) nach einem der vorherigen Ansprüche,
**dadurch gekennzeichnet,**
**dass** ein Bauraum der Griffvorrichtung (10) eine maximale Bautiefe (10.3) von 65 mm, bevorzugt 60 mm und besonders bevorzugt von 55 mm aufweist,
wobei insbesondere die Bautiefe (10.3) der kürzeste Abstand von einer Vorderseite (10.1) bis zu einer Rückseite (10.2) der Griffvorrichtung (10) darstellt.

13. Griffvorrichtung (10) nach einem der vorherigen Ansprüche,
**dadurch gekennzeichnet,**
**dass** zumindest ein Verbindungselement (16, 29) als flexibles Verbindungselement, insbesondere als Bowdenzug, Kette oder Seilzug, ausgestaltet ist,
wobei insbesondere am Griffträger (11) Haltemittel (11.3) zur Aufnahme von zumindest einem Verbindungselement (16, 29) vorgesehen sind.

14. Verfahren zur Betätigung einer Griffvorrichtung (10) nach einem der vorherigen Ansprüche,
**dadurch gekennzeichnet,**
**dass** die folgenden Schritte ausführbar sind:
a) Lineares Ausfahren des Griffteils (20) von der Ruhestellung (la) in die Betriebsstellung (Ib)
b) Bogenförmiges Schwenken des Griffteils (20) von der Betriebsstellung (Ib) zur Auslösestellung (Ic)
c) Lineares Einfahren des Griffteils (20) von der Betriebsstellung (Ib) in die Ruhestellung (la).

15. Verfahren zur Betätigung einer Griffvorrichtung (10) nach Anspruch 14,
**dadurch gekennzeichnet,**
**dass** zumindest einer der folgenden Schritte ausführbar ist:
d1) Sensierung einer Annäherung von einem Bediener durch ein Sensorelement (23, 24)
d2) Sensierung eines Eingriffsversuches von einem Bediener in das Griffteil (20) durch ein Sensorelement (23, 24)
e) Ansteuerung zumindest des Sicherheitssystems (90) oder der Fahrzeugelektronik, insbesondere nach einer Sensierung nach Schritt d1) oder d2)
f) Wecken eines mobilen ID-Gebers (91) eines Sicherheitssystems (90)
g) Vorfeldbeleuchtung durch eine Lichteinheit (26).

## Claims

1. Handle device (10) for a locking device (80) for a movable part (70), such as a door, flap or the like, of a vehicle (100)
with a handle part (20) which can be movably mounted relative to the movable part (70), wherein the locking device (80) can be connected to the handle part (20) via a connecting element (16) and the handle part (20) serves to actuate the locking device (80),
wherein the handle part (20) is movable at least between a rest position (Ia) and an operating position (Ib),
wherein in the rest position (Ia) the handle part (20) can be formed in particular flush with the movable part (70), and
wherein, in the operating position (lb), the handle part (20) can be detached from the movable part (70) in such a way that it can be gripped by an operator,
wherein the handle part (20) is movable from its operating position (Ib) into an additional release position (Ic) in which a mechanical actuation of the handle part (20) can be transmitted to the connecting element (16), whereby the locking device (80) can be actuated,
**characterized in that**
the handle part (20) can be mounted on the movable part (70) by means of a handle support (11), and an opening (12) in the handle support (11) for the handle part (20) being concealed both in the operating position (Ib) and in the release position (Ic) by the extended handle part (20).

2. Handle device (10) according to claim 1,
**characterized in that**
the handle part (20) can be moved linearly (50) between the rest position (Ia) and the operating position (Ib), and/or
**in that** the handle part (20) can be moved in an arcuate manner (51), in particular in an upward arcuate manner, between the operating position (Ib) and the release position (Ic).

3. Handle device (10) according to claim 1 or 2,
**characterized in that**
the handle part (20) is arranged movably on the handle support (11) via two levers (13, 14), and/or
wherein at least one of the levers (13, 14) is movably connected to the handle support (11) on both sides via a continuous axle (13.3, 14.3).

4. Handle device (10) according to any one of the preceding claims,
**characterized in that**
the two levers (13, 14) for guiding the handle part (20) have pivot points (13.1, 13.2, 14.1, 14.2) arranged differently from one another, and/or
wherein in particular the two levers (13, 14) are arranged laterally adjacent to one another and are not directly connected to one another, and/or
wherein in particular the two levers (13, 14) each embrace the handle part (20) on both sides, in particular from the outside.

5. Handle device (10) according to any one of the preceding claims,
**characterized in that**
the first lever (13) is designed as a drive lever in order to move the handle part (20) at least between the rest position (Ia) and the operating position (lb),
wherein in particular a first spring element (17) acts on the first lever (13) in such a way that the handle part (20) can be transferred independently from the rest position (Ia) into the operating position (Ib) and/or
**in that** a drive (19) engages on the first lever (13), as a result of which the handle part (20) can be moved at least between the rest position (Ia) and the operating position (Ib), wherein in particular the drive (19) generates a driving force which is directed opposite to a spring force from the first spring element (17).

6. Handle device (10) according to any one of the preceding claims,
**characterized in that**
the second lever (14) is designed as an actuating lever in order to transmit the mechanical movement of the handle part (20) from the operating position (Ib) to the release position (Ic) to the connecting element (16), and/or
wherein in particular an actuation of the connecting element (16) is only possible after the handle part (20) has reached the operating position (Ib), and/or
wherein in particular the second lever (14) undergoes a vertical movement relative to the handle support (11) from the operating position (Ib) to the release position (Ic) and/or in that the second lever (14) is of angular design (14.4), in particular of rectangular design,
wherein in particular its pivot points (14.1, 14.2) relative to the handle support (11) are each provided at a distal distance from the angle (14.4) or at the end of the angle (14.4), and/or
wherein at least one pivot point (14.1, 14.2) relative to the handle support (11) is designed as a pivot bearing relative to the handle support (11) in order to also enable a vertical movement of the second lever (14) relative to the handle support (11) and/or in that the second lever (14) interacts mechanically with the connecting element (16) indirectly via a transmission lever (15), in particular in order to at least partially decouple the lever (15) from the connecting element (16), and/or
wherein in particular a second spring element (18) cooperates with the transmission lever (15) to move the transmission lever (15) into its rest position (IIa), and/or
wherein in particular an arcuate guide (15.2) is provided between the second lever (14) and the transmission lever (15) to form a freewheel between the second lever (14) and the transmission lever (15), and/or
wherein in particular the transmission lever (15) has a pivot point (15.1) relative to the handle support (11).

7. Handle device (10) according to any one of the preceding claims,
**characterized in that**
the opening (12) has an edge (12.1) which projects into the interior of the handle support (11) in order to protect the latter and/or
**in that** an edge (12.1) of the opening (12) in the handle support (11) for the handle part (20) is designed in the manner of a channel, in particular all the way around, into the interior (11.1), and/or
wherein said edge (12.1) comprises a guide means (12.2) for guiding said handle part (20).

8. Handle device (10) according to any one of the preceding claims,
**characterized in that**
at least one crash barrier (21) and/or a mass balance weight (22) is provided in order to fix the handle part (20) in the rest position (Ia) in the event of a crash,
wherein in particular the crash barrier (21) and/or the mass balance weight (22) cooperates mechanically with at least one of the two levers (13, 14).

9. Handle device (10) according to any one of the preceding claims,
**characterized in that**
at least one first sensor element (23, 24) is provided in order to actuate the handle device (10), a safety system (90) and/or the vehicle electronics (101),
wherein the sensor element (23, 24) is configured at least as a proximity sensor, engagement sensor, antenna, signal transmitter or temperature sensor and is connected in particular to a control unit (25) within the handle device (10) and/or
**in that** at least two sensor elements (23, 24) are present, at least one sensor element (23, 24) being designed as a capacitive sensor, and/or
**in that** at least one lighting unit (26) is present, which is integrated at least in the handle part (20) or in the handle support (11), in order to implement apron lighting.

10. Handle device (10) according to any one of the preceding claims,
**characterized in that**
at least one mechanical locking cylinder (27) is provided, in particular on the handle support (11), as a result of which mechanical unlocking or locking of the locking device (80) can be achieved, and/or
**in that** the mechanical locking cylinder (27) is arranged from the outside behind the handle part (20) or behind a flap (28) or a cap (28), and/or
**in that** a button (28), a flap (28) or a cap (28) is used for the emergency extension of the handle part (20) into its operating position (Ib).

11. Handle device (10) according to any one of the preceding claims,
**characterized in that**
the handle part (20) has at least one engagement recess (20.1) on one side, wherein in particular the engagement recess (20.1) can also be provided open on both sides, and/or
wherein the handle part (20) has a maximum handle part depth (21.2) of 45 mm, preferably 40 mm.

12. Handle device (10) according to any one of the preceding claims,
**characterized in that**
an installation space of the handle device (10) has a maximum installation depth (10.3) of 65 mm, preferably 60 mm and particularly preferably 55 mm,
wherein in particular the installation depth (10.3) represents the shortest distance from a front side (10.1) to a rear side (10.2) of the handle device (10).

13. Handle device (10) according to any one of the preceding claims,
**characterized in that**
at least one connecting element (16, 29) is designed as a flexible connecting element, in particular as a Bowden cable, chain or cable,
wherein holding means (11.3) for receiving at least one connecting element (16, 29) are provided in particular on the handle support (11).

14. Method of actuating a handle device (10) according to any one of the preceding claims, **characterized in that**
the following steps are executable:
a) Linear extension of the handle part (20) from the rest position (Ia) to the operating position (Ib)
b) Arc-shaped pivoting of the handle part (20) from the operating position (lb) to the release position (Ic)
c) Linear retraction of the handle part (20) from the operating position (lb) to the rest position (la).

15. Method of operating a handle device (10) according to claim 14,
**characterized in that**
at least one of the following steps is executable:
d1) Sensing of an approach from an operator by a sensor element (23, 24)
d2) Sensing of an attempt by an operator to engage the handle part (20) by a sensor element (23, 24)
e) Control of at least the safety system (90) or the vehicle electronics, in particular after sensing according to step d1) or d2)
f) Wake-up of a mobile ID transponder (91) of a safety system (90)
g) apron lighting by means of a lighting unit (26).

## Revendications

1. Dispositif de poignée (10) pour un dispositif de fermeture (80) d'une partie mobile (70), telle qu'une porte, un volet ou similaire, d'un véhicule (100)
avec une partie de poignée (20) qui peut être montée mobile par rapport à la partie mobile (70), le dispositif de fermeture (80) pouvant être relié à la partie de poignée (20) par un élément de liaison (16) et la partie de poignée (20) servant à actionner le dispositif de fermeture (80),
dans lequel la partie de poignée (20) est mobile au moins entre une position de repos (la) et une position de fonctionnement (Ib),
dans la position de repos (la), la partie de poignée (20) pouvant être formée en particulier à fleur de la partie mobile (70), et
dans lequel, dans la position de fonctionnement (Ib), la partie de poignée (20) peut être détachée de la partie mobile (70) de telle sorte qu'elle puisse être saisie par un opérateur,
la partie de poignée (20) pouvant être déplacée de sa position de fonctionnement (Ib) dans une position de déclenchement supplémentaire (Ic), dans laquelle un actionnement mécanique de la partie de poignée (20) peut être transmis à l'élément de liaison (16), ce qui permet d'actionner le dispositif de fermeture (80),
**caractérisé en ce que**
la partie de poignée (20) peut être montée sur la partie mobile (70) par un support de poignée (11) et un passage (12) dans le support de poignée (11) pour la partie de poignée (20) étant recouvert par la partie de poignée (20) déployée aussi bien dans la position de fonctionnement (Ib) que dans 6a position de déclenchement (Ic).

2. Dispositif de poignée (10) selon la revendication 1,
**caractérisé en ce que**
la partie de poignée (20) est mobile linéairement (50) entre la position de repos (la) et la position de fonctionnement (Ib), et/ou
**en ce que** la partie de poignée (20) est mobile en forme d'arc (51), en particulier en forme d'arc vers le haut, entre la position de fonctionnement (Ib) et la position de déclenchement (Ic).

3. Dispositif de poignée (10) selon la revendication 1 ou 2,
**caractérisé en ce que**
la partie de poignée (20) est disposée de manière mobile sur le support de poignée (11) par l'intermédiaire de deux leviers (13, 14), et/ou
au moins l'un des leviers (13, 14) étant relié de manière mobile des deux côtés au support de poignée (11) par l'intermédiaire d'un axe continu (13.3, 14.3).

4. Dispositif de poignée (10) selon l'une quelconque des revendications précédentes, **caractérisé en ce que**
les deux leviers (13, 14) pour le guidage de la partie de poignée (20) présentent des points de rotation/pivotement (13.1, 13.2, 14.1, 14.2) disposés différemment les uns des autres, et/ou
les deux leviers (13, 14) étant notamment disposés latéralement l'un à côté de l'autre et n'étant pas directement reliés entre eux, et/ou
dans lequel en particulier les deux leviers (13, 14) entourent la partie de poignée (20) respectivement des deux côtés, en particulier de l'extérieur.

5. Dispositif de poignée (10) selon l'une quelconque des revendications précédentes, **caractérisé en ce que**
le premier levier (13) est conçu comme un levier d'entraînement pour déplacer la partie de poignée (20) au moins entre la position de repos (la) et la position de fonctionnement (Ib),
dans lequel en particulier un premier élément de ressort (17) agit sur le premier levier (13) de telle sorte que la partie de poignée (20) peut être transférée de manière autonome de la position de repos (Ia) dans la position de fonctionnement (Ib) et/ou en ce qu'un entraînement (19) agit sur le premier levier (13), ce qui permet de déplacer la partie de poignée (20) au moins entre la position de repos (Ia) et la position de fonctionnement (Ib),
dans lequel, en particulier, l'entraînement (19) génère une force d'entraînement qui est dirigée en sens inverse d'une force de ressort provenant du premier élément de ressort (17).

6. Dispositif de poignée (10) selon l'une quelconque des revendications précédentes, **caractérisé en ce que**
le deuxième levier (14) est conçu comme un levier d'actionnement, afin de transmettre le mouvement mécanique de la partie de poignée (20) de la position de fonctionnement (Ib) à la position de déclenchement (Ic) à l'élément de liaison (16), et/ou
un actionnement de l'élément de liaison (16) n'étant notamment possible qu'après avoir atteint la position de fonctionnement (Ib) de la partie de poignée (20), et/ou le deuxième levier (14) subissant en particulier un mouvement en hauteur par rapport au support de poignée (11) de la position de fonctionnement (Ib) à la position de déclenchement (Ic) et/ou
**en ce que** le deuxième levier (14) est configuré en forme d'angle (14.4), en particulier en forme d'angle droit,
ses points de rotation/pivotement (14.1, 14.2) par rapport au support de poignée (11) étant notamment prévus respectivement à distance distale de l'angle (14.4) ou à l'extrémité de l'angle (14.4), et/ou
au moins un point de rotation/pivotement (14.1, 14.2) par rapport au support de poignée (11) étant conçu comme un palier de rotation/pivotement par rapport au support de poignée (11), afin de permettre également un mouvement en hauteur du deuxième levier (14) par rapport au support de poignée (11) et/ou
**en ce que** le deuxième levier (14) coopère mécaniquement indirectement avec l'élément de liaison (16) par l'intermédiaire d'un levier de transmission (15), afin notamment de désaccoupler au moins partiellement le levier (15) de l'élément de liaison (16), et/ou dans lequel, en particulier, un deuxième élément de ressort (18) coopère avec le levier de transmission (15) pour déplacer le levier de transmission (15) dans sa position de repos (IIa), et/ou
dans lequel, en particulier, un guide en forme d'arc (15.2) est présent entre le deuxième levier (14) et le levier de transmission (15) pour former une roue libre entre le deuxième levier (14) et le levier de transmission (15), et/ou
dans lequel, en particulier, le levier de transmission (15) présente un point de rotation (15.1) par rapport au support de poignée (11).

7. Dispositif de poignée (10) selon l'une quelconque des revendications précédentes, **caractérisé en ce que**
le passage (12) présente un bord (12.1) qui fait saillie à l'intérieur du support de poignée (11) afin de le protéger et/ou
**en ce qu'**un bord (12.1) du passage (12) dans le support de poignée (11) pour la partie de poignée (20) est configuré à la manière d'un canal, en particulier entièrement, vers l'intérieur (11.1), et/ou
dans lequel le bord (12.1) comprend un moyen de guidage (12.2) pour guider la partie de poignée (20).

8. Dispositif de poignée (10) selon l'une quelconque des revendications précédentes, **caractérisé en ce**
**qu'**il existe au moins une barrière de collision (21) et/ou un contrepoids d'équilibrage des masses (22) pour fixer la partie de poignée (20) dans la position de repos (la) en cas de collision,
dans lequel, en particulier, la barrière de collision (21) et/ou le contrepoids d'équilibrage des masses (22) coopèrent mécaniquement avec au moins l'un des deux leviers (13, 14).

9. Dispositif de poignée (10) selon l'une quelconque des revendications précédentes, **caractérisé en ce**
**qu'**au moins un premier élément de détection (23, 24) est présent pour commander le dispositif de poignée (10), un système de sécurité (90) et/ou l'électronique du véhicule (101),
l'élément de détection (23, 24) étant conçu au moins comme un capteur de proximité, un capteur d'intervention, une antenne, un émetteur de signaux ou un capteur de température et étant en particulier relié à une unité de commande (25) à l'intérieur du dispositif de poignée (10) et/ou
en ce qu'il existe au moins deux éléments de détection (23, 24), au moins un élément de détection (23, 24) étant conçu comme un capteur capacitif, et/ou en ce qu'il existe au moins une unité d'éclairage (26) qui est intégrée au moins dans la partie de poignée (20) ou dans le support de poignée (11), afin de réaliser un éclairage de l'avant.

10. Dispositif de poignée (10) selon l'une quelconque des revendications précédentes, **caractérisé en ce**
**qu'**au moins un cylindre de fermeture mécanique (27) est prévu en particulier sur le support de poignée (11), ce qui permet d'obtenir un déverrouillage ou un verrouillage mécanique du dispositif de fermeture (80) et/ou
en ce que le cylindre de fermeture mécanique (27) est disposé de l'extérieur derrière la partie de poignée (20) ou derrière un volet (28) ou un capuchon (28), et/ou qu'un bouton-poussoir (28), un volet (28) ou un capuchon (28) sert au dégagement d'urgence de la partie de poignée (20) dans sa position de fonctionnement (Ib).

11. Dispositif de poignée (10) selon l'une quelconque des revendications précédentes, **caractérisé en ce que**
la partie de poignée (20) présente au moins une cavité d'engagement (20.1) d'un côté, la cavité d'engagement (20.1) pouvant notamment être prévue ouverte des deux côtés, et/ou
la partie de poignée (20) présentant une profondeur maximale de partie de poignée (21.2) de 45 mm, de préférence de 40 mm.

12. Dispositif de poignée (10) selon l'une quelconque des revendications précédentes, **caractérisé en ce**
**qu'**un espace de construction du dispositif de poignée (10) présente une profondeur de construction maximale (10.3) de 65 mm, de préférence de 60 mm et de manière particulièrement préférée de 55 mm,
la profondeur de construction (10.3) représentant en particulier la distance la plus courte entre une face avant (10.1) et une face arrière (10.2) du dispositif de poignée (10).

13. Dispositif de poignée (10) selon l'une quelconque des revendications précédentes, **caractérisé en ce**
**qu'**au moins un élément de liaison (16, 29) est conçu comme un élément de liaison flexible, en particulier comme un câble Bowden, une chaîne ou un câble de traction, des moyens de retenue (11.3) étant prévus en particulier sur le support de poignée (11) pour recevoir au moins un élément de liaison (16, 29).

14. Procédé d'actionnement d'un dispositif de poignée (10) selon l'une des revendications précédentes,
**caractérisé en ce que**
les étapes suivantes sont réalisables :
a) sortie linéaire de la partie poignée (20) de la position de repos (la) à la position de fonctionnement (Ib)
b) pivotement en arc de la partie poignée (20) de la position de fonctionnement (Ib) à la position de déclenchement (Ic)
c) rétraction linéaire de la partie poignée (20) de la position de fonctionnement (Ib) à la position de repos (la).

15. Procédé d'actionnement d'un dispositif de poignée (10) selon la revendication 14, **caractérisé en ce**
**qu'**au moins l'une des étapes suivantes est exécutable :
d1) détection d'une approche d'un opérateur par un élément de détection (23, 24)
d2) détection d'une tentative d'engagement par un opérateur dans la partie de poignée (20) par un élément de détection (23, 24)
e) commande d'au moins le système de sécurité (90) ou de l'électronique du véhicule, en particulier après une détection selon l'étape d1) ou d2)
f) réveil d'un émetteur d'identification mobile (91) d'un système de sécurité (90)
g) éclairage de l'avant par une unité d'éclairage (26).
